(19) Europäisches Patentamt
European Patent Office
Office européen des brevets

(11) EP 2 514 779 B1

(12) **EUROPEAN PATENT SPECIFICATION**

(45) Date of publication and mention of the grant of the patent:
**03.04.2024 Bulletin 2024/14**

(21) Application number: **10837643.5**

(22) Date of filing: **15.12.2010**

(51) International Patent Classification (IPC):
***C08G 18/44*** (2006.01) ***C08G 64/02*** (2006.01)
***C09D 175/04*** (2006.01) ***C09J 175/04*** (2006.01)
***D01F 6/94*** (2006.01) ***C08G 64/30*** (2006.01)
***C08G 18/66*** (2006.01) ***D01F 6/70*** (2006.01)
***D06N 3/14*** (2006.01) ***D06M 15/564*** (2006.01)

(52) Cooperative Patent Classification (CPC):
**C08G 64/0208; C08G 18/44; C08G 18/664; C08G 64/305; D01F 6/70; D06M 15/564; D06N 3/146;** D06N 2209/06; D06N 2211/28

(86) International application number:
**PCT/JP2010/072589**

(87) International publication number:
**WO 2011/074617 (23.06.2011 Gazette 2011/25)**

(54) **POLYCARBONATE DIOL-CONTAINING COMPOSITION, PROCESS FOR PRODUCING THE SAME, POLYURETHANE OBTAINED USING THE SAME, AND PROCESS FOR PRODUCING THE POLYURETHANE**

POLYCARBONATDIOL ENTHALTENDE ZUSAMMENSETZUNG, HERSTELLUNGSVERFAHREN DAFÜR, POLYURETHAN, WELCHES UNTER VERWENDUNG DERSELBEN ERHALTEN WIRD, VERFAHREN ZUR HERSTELLUNG DES POLYURETHANS

COMPOSITION CONTENANT DU POLYCARBONATE DIOL, SON PROCÉDÉ DE FABRICATION, POLYURÉTHANE OBTENU L'UTILISANT ET LE PROCÉDÉ DE FABRICATION DU POLYURÉTHANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2009 JP 2009286782**
**06.09.2010 JP 2010199238**

(43) Date of publication of application:
**24.10.2012 Bulletin 2012/43**

(73) Proprietor: **Mitsubishi Chemical Corporation**
**Tokyo 100-8251 (JP)**

(72) Inventors:
- **KUSAKA Haruhiko**
  **Kanagawa 227-8502 (JP)**
- **WAKABAYASHI Kazuki**
  **Kanagawa 227-8502 (JP)**
- **OHARA Teruhiko**
  **Tokyo 100-8251 (JP)**
- **ITO Hiroto**
  **Mie 510-8530 (JP)**
- **KUSANO Kazunao**
  **Fukuoka 806-0004 (JP)**

(74) Representative: **Vossius & Partner**
**Patentanwälte Rechtsanwälte mbB**
**Siebertstrasse 3**
**81675 München (DE)**

(56) References cited:
**EP-A2- 0 343 572**
**JP-A- 4 031 430**
**JP-A- 2000 095 854**
**JP-A- 2000 095 855**
**JP-A- 2001 123 112**
**JP-A- 2008 037 988**
**US-A- 4 891 421**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 514 779 B1

## Description

### Technical Field

The present invention relates to a novel polycarbonate diol-containing composition. The invention further relates to a polycarbonate-based polyurethane which is produced using the polycarbonate diol-containing composition of the invention as a starting material and which has an excellent balance among properties and is useful in applications including elastic fibers, synthetic or artificial leathers, and high-performance elastomers.

### Background Art

Starting materials for the main soft segments of polyurethane resins which have hitherto been produced on an industrial scale are classified into an ether type represented by polytetramethylene glycol, a polyester polyol type represented by adipate esters, a polylactone type represented by polycaprolactone, and a polycarbonate type represented by polycarbonate diols (non-patent document 1).

The ether type, among these types, is regarded as poor in heat resistance and light resistance although this type is excellent in terms of hydrolytic resistance, flexibility, and stretchability. The polyester polyol type, on the other hand, brings about improvements in heat resistance and weatherability, but the ester moiety thereof has low hydrolytic resistance. The polyester polyol type hence cannot be used in some applications.

Meanwhile, the polylactone type is regarded as a grade which is superior in hydrolytic resistance to the polyester polyol type. However, since this type also has ester groups, hydrolysis thereof cannot be completely inhibited. Although use of a mixture of the polyester polyol type, ether type, and polylactone type has been proposed, it is still impossible to entirely cover the drawback(s) of each type.

In contrast, the polycarbonate type in which polycarbonate diols are used is regarded as a best durable grade in terms of heat resistance and hydrolytic resistance, and is being extensively utilized in applications such as durable films, artificial leathers for motor vehicles, (water-based) coating compositions, and adhesives.

However, most of the polycarbonate diols which are extensively on the market at present are polycarbonate diols synthesized from 1,6-hexanediol. Since these polycarbonate diols are crystalline, there has been a problem that the diols at ordinary temperature have the consistency of wax, i.e., no flowability, and are difficult to handle.

In addition, polyurethanes produced using polycarbonate diols synthesized from 1,6-hexanediol show enhanced susceptibility to soft-segment agglomeration and, hence, have a problem that these polyurethanes are poor in flexibility, elongation, and bendability especially at low temperatures and also in elastic recovery. Applications thereof hence have been limited. Furthermore, polyurethane solutions obtained therefrom have a high viscosity and have had poor handleability when molded or coated. Moreover, it has been pointed out that artificial leathers produced using these polyurethanes as a starting material have a hard texture and are poor in "feeling" as compared with natural leathers.

Under such circumstances, polycarbonate diols having various structures have been proposed in order to overcome those problems.

For example, there are techniques in which 1,6-hexanediol is mixed with another diol to obtain a copolycarbonate. Specifically, a process in which 1,6-hexanediol is copolymerized with 1,4-butanediol (patent document 1) and a process in which 1,6-hexanediol is copolymerized with 1,5-pentanediol (patent document 2) have been proposed.

Furthermore, techniques in which diols other than 1,6-hexanediol are used in combination have also been proposed. Examples thereof include a process in which 1,3-propanediol is used in combination with 1,4-butanediol or 1,5-pentanediol (patent document 3) and a process in which two or more linear diols in which the number of carbon atoms is 6 or more on average are used in combination (patent document 4).

Moreover, a technique in which a diol having a substituent in the main chain is used has been proposed as a technique effective in reducing the crystallinity of diol-derived moieties. Examples thereof include a combination of 2-methyl-1,3-propanediol and another alkylene glycol (patent document 5) and a combination of 3-methyl-1,5-pentanediol and another alkylenediol (patent document 6).

However, any of these techniques does not give a polycarbonate diol which combines a satisfactory balance among the properties of the polycarbonate diol and satisfactory handleability and which gives a polyurethane that has a balance among the properties thereof. There hence has been a desire for development of a polycarbonate diol which satisfies these requirements.

Patent Document 7 discloses a polycarbonatediol composition obtainable by reacting an aliphatic diol with an organic carbonate or a compound which can react with an aliphatic diol to form a carbonate moiety, characterised in that the aliphatic diol comprises a mixture of (i) 20 to 80% by mole of at least one polyvalent alcohol having a main chain including 3 to 20 carbon atoms, and including at least one side chain, and (ii) 80 to 20% by mole of 1,6-hexanediol.

Related Art Documents

Patent Documents

Patent Document 1: JP-A-5-51428
Patent Document 2: JP-A-2-289616
Patent Document 3: International Publication No. 2002-070584
Patent Document 4: JP-A-2000-95852
Patent Document 5: International Publication No. 2006-88152
Patent Document 6: JP-A-60-195117
Patent Document 7: EP 0 343 572 A2

Non-Patent Document

Non-Patent Document 1: Poriuretan No Kiso To Oyo, pp.96-106, supervised by MATSLFNAGA Katsuji, published by CMC Publishing Co., Ltd., November 2006 Outline of the Invention

Problems to be Solved by the Invention

An object of the invention is to provide a polycarbonate diol-containing composition which is liquid at ordinary temperature and has excellent handleability. Another object is to develop a new polycarbonate diol-containing composition that gives a polyurethane which is excellent in terms of flexibility, elastic recovery, and low-temperature flexibility and bendability while retaining the properties required of polyurethanes, i.e., heat resistance, weatherability, and water resistance, which are properties of polyurethanes derived from conventional polycarbonate diols.

Still another object of the invention is to develop a new polycarbonate diol-containing composition which gives polyurethane products having advantageous properties. For example, artificial leathers produced using this polycarbonate diol-containing composition give an improved feeling, and coating compositions produced using this polycarbonate diol-containing composition as a starting material show enhanced soft-touch characteristics. A further object of the invention is to develop a polycarbonate diol-containing composition which gives a polyurethane that has a reduced solution viscosity and hence has enhanced handleability when molded and coated.

Still a further object of the invention is to provide a polycarbonate diol-containing composition which does not contain a titanium-based catalyst that excessively accelerates reactions for polyurethane formation in polyurethane production steps. Still a further object of the invention is to provide a process for producing a polycarbonate diol-containing composition reduced in coloration.

Hitherto, a large number of aliphatic copolycarbonate diols have been investigated or proposed for the purpose of satisfying those requirements. However, none of the aliphatic copolycarbonate diols has reached a level on which those required properties can be sufficiently satisfied.

Means for Solving the Problems

The present inventors diligently made investigations in order to eliminate those problems. As a result, the invention has been achieved. Namely, the inventors have found that a polycarbonate diol-containing composition which has a specific makeup satisfies those properties. The inventors have further found that when the polycarbonate diol-containing composition is used to produce a polyurethane, the problems described above can be overcome. The invention has been thus accomplished.

The present invention is as defined in the appended claims.

Advantage of the Invention

The polycarbonate diol-containing composition of the invention is liquid at ordinary temperature and, hence, has excellent handleability when used as a starting material for producing polyurethanes or the like.

The polyurethane produced using the polycarbonate diol-containing composition of the invention has the merit of being excellent in terms of flexibility, elastic recovery, and low-temperature flexibility and bendability while retaining heat resistance, weatherability, and water resistance, which are properties of polyurethanes derived from conventional polycarbonate diols. Another feature of the polyurethane obtained using the polycarbonate diol-containing composition of the invention is that solutions of the polyurethane have a low viscosity and have enhanced moldability or coating

property.

Consequently, when the polyurethane produced using the polycarbonate diol-containing composition of the invention is used to produce, for example, an artificial leather or a coating composition, then the artificial leather has high heat resistance and, despite this, gives a satisfactory feeling and is flexible and the coating composition has improved coating property and enhanced soft-touch characteristics. The polyurethane hence is exceedingly useful industrially.

Modes for Carrying Out the Invention

Embodiments of the invention will be explained below in detail. However, the invention should not be construed as being limited to the following embodiments, and can be variously modified within the spirit of the invention.

<1. Polycarbonate Diol-containing Composition>

The polycarbonate diol-containing composition (hereinafter sometimes referred to simply as "polycarbonate diol") of the invention is a composition which contains a polycarbonate diol and is obtained by polymerizing a diaryl carbonate (i), a 2,2-dialkyl-1,3-propanediol (ii), and a diol (iii) other than a 2,2-dialkyl-1,3-propanediol. It is preferred that the polycarbonate diol should have the following general formulae (A) and (B) as repeating units.

[Chem. 2]

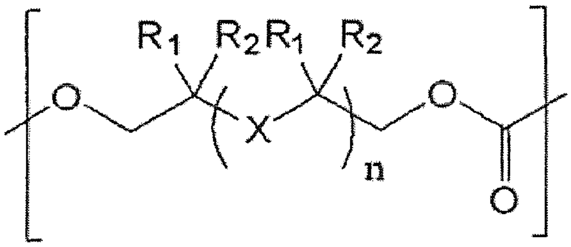

(A)

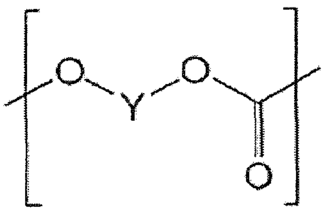

(B)

In the formulae, n is 0 or 1, and $R_1$ and $R_2$ each independently are a group selected from the group consisting of alkyl, aryl, alkenyl, alkynyl, and alkoxy groups having 1-15 carbon atoms and may have an oxygen atom, a sulfur atom, a nitrogen atom, a halogen atom, or a substituent containing any of these atoms, so long as the number of carbon atoms is within that range. X and Y each independently represent a divalent group which has 1-15 carbon atoms and may have a heteroatom.

$R_1$ and $R_2$ each independently may be different groups or the same group. It is necessary that these substituents should have one or more carbon atoms for enabling the invention to bring about the effects thereof. Too many carbon atoms pose problems such as, for example, a decrease in polymerization reactivity. Consequently, the number of carbon atoms is 15 or less, preferably 10 or less.

Examples of the alkyl groups include methyl, ethyl, isopropyl, n-propyl, n-butyl, isobutyl, t-butyl, pentyl, hexyl, heptyl, octyl, and nonyl. Preferred of these are methyl, ethyl, n-propyl, n-butyl, pentyl, and the like.

Examples of the alkenyl groups include an ethylenyl group, propenyl, butenyl, and pentenyl. Especially preferred are an ethylenyl group, propenyl, and the like.

Examples of the alkynyl groups include ethynyl, propynyl, butynyl, and pentynyl. Preferred of these are ethynyl, propynyl, and the like.

Examples of the alkoxy groups include methoxy, ethoxy, n-propoxy, isopropoxy, and n-butoxy. Preferred of these are methoxy, ethoxy, n-propoxy, and the like.

Examples of the substituents which may be possessed by the alkyl, aryl, alkenyl, alkynyl, and alkoxy groups include a nitrile group, nitro, amino, amido, methoxy, ethoxy, n-propoxy, isopropoxy, n-butoxy, mercapto, and halogen

atoms. Preferred of these are nitro, halogen atoms, and the like.

Examples of the halogen atoms include fluorine, chlorine, bromine, and iodine atoms.

X and Y are not particularly limited from the standpoint of obtaining the effects of the invention, and may have the structure of either a chain group or a cyclic group. The number of atoms of carbon as the element which constitutes these groups is 15 or less, preferably 10 or less, and heteroatoms such as, e.g., oxygen, sulfur, and nitrogen atoms may have been included therein.

It is preferred that Y should be either a divalent group which has 1-15 carbon atoms and contains no quaternary carbon atom or a divalent group which has 5-15 carbon atoms and in which at least the carbon atom bonded to each oxygen atom and the carbon atom(s) bonded to that carbon atom are not quaternary carbon atoms.

Examples of the group X include $-CH_2-$, $-CH_2CH_2-$, $-CH_2CH_2CH_2-$, $-CH_2CH(CH_3)CH_2-$, $-CH_2CH(CH_3)CH_2-$, and the group represented by the following formula (C). More preferred of these are $-CH_2-$, $-CH_2CH_2-$, the group represented by the following formula (C), and the like.

[Chem. 3]

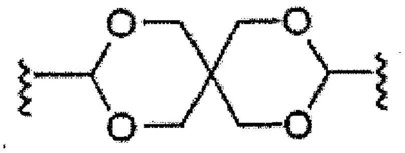

(C)

Preferred examples of the group Y are groups formed from the compounds shown below as examples which give the structure (B) shown above. More preferred are groups formed from the compounds shown below as examples which give the preferred structure (B).

The polycarbonate diol of the invention is terminated by a hydroxyl group at each of both ends. Namely, the polycarbonate diol has a structure which enables the hydroxyl groups to react with an isocyanate in a polyurethane formation reaction.

The proportions of (A) and (B), which constitute the polycarbonate diol, usually are such that the (A)/(B) molar ratio is preferably 9911 to 1/99, more preferably 80/20 to 20/80, even more preferably 70/30 to 30/70, especially preferably 50/50 to 30/70.

The structure which brings about the effects of the invention is structure (A), and the effects can be sufficiently obtained by regulating the proportion of structure (A) in the polycarbonate diol so as to be not less than the lower limit. Furthermore, handleability during polymerization is improved by regulating the proportion thereof so as to be not higher than the upper limit.

The lower limit of the number-average molecular weight of the polycarbonate diol of the invention is preferably 500, more preferably 700, even more preferably 1,000. Meanwhile, the upper limit thereof is preferably 10,000, more preferably 5,000, even more preferably 3,000. By regulating the upper limit of the number-average molecular weight of the polycarbonate diol to that value, the polycarbonate diol is inhibited from having too high a viscosity and, hence, is rendered easy to handle during polyurethane formation.

Specific examples of raw material diols which give structure (A) and structure (B) when used to produce a polycarbonate diol are shown below.

Examples of starting-material compounds which give structure (A) include: 2,2-dialky-substituted 1,3-propanediols (hereinafter often referred to as 2,2-dialkyl-1,3-propanediols; the alkyl groups each are an alkyl group having up to 15 carbon atoms) such as 2,2-dimethyl-1,3-propanediol (hereinafter often referred to as neopentyl glycol and abbreviated to NPG), 2-ethyl-2-butyl-1,3-propanediol, 2,2-diethyl-1,3-propanediol, and 2-pentyl-2-propyl-1,3-propanediol; tetraalkyl-substituted alkylenediols such as 2,2,4,4-tetramethyl-1,5-pentanediol and 2,2,9,9-tetramethyl-1,10-decanediol; diols containing a cyclic group, such as 3,9-bis(1,1-dimethyl-2-hydroxyethyl)-2,4,8,10-tetraoxaspiro[5.5]andecane; and 2,2-diphenyl-1,3-propanediol, 2,2-divinyl-1,3-ropanediol, 2,2-diethyl-1,3-propanediol, 2,2-dimethoxy-1,3-propanediol, bis(2-hydroxy-1,1 -dimethyl ethyl) ether, bis(2-hydroxy-1,1-dimethylethyl) thioether, and 2,2,4,4-tetramethyl-3 -cyano-1,5-pentanediol.

Preferred of these are compounds in which n in structure (A) is 0 and $R_1$ and $R_2$ in structure (A) are alkyl groups having 1-5 carbon atoms. Specific examples of such starting-material compounds which give the structure include 2,2-dialkyl-substituted 1,3-propanediols such as 2,2-dimethyl-1,3-propanediol, 2-ethyl-2-butyl-1,3-propanediol, 2,2-diethyl-1,3-propanediol, and 2-pentyl-2-propyl-1,3-propanediol.

Examples of starting-material compounds which give structure (B) include: linear diols in which the hydroxyl groups are present at the ends, such as ethylene glycol, 1,3-propanediol, 1,4-butanediol, 1,5-pentanediol, 1,6-hexanediol,

1,7-heptanediol, 1,8-octanediol, 1,9-nonanediol, 1,10-decanediol, 1,11-undecanediol, 1,12-dodecanediol, and 1,20-eicosanediol; diols having one or more ether bonds, such as diethylene glycol, triethylene glycol, tetraethylene glycol, and polytetramethylene glycol; thioether diols such as bishydroxyethyl thioether; diols having one or more branches, such as 2-ethyl-1,6-hexanediol, 2-methyl-1,3-propanediol, 3-methyl-1,5-pentanediol, and 2,4-diethyl-1,5-pentanediol; diols having one or more cyclic groups in the molecule, such as 1,3-cyclohexanediol, 1,4-cyclohexanediol, 1,4-cyclohexanedimethanol, 4,4-dicyclohexyldimethylmethanediol, 2,2'-bis(4-hydroxycyclohexyl)propane, 1,4-dihydroxyethylcyclohexane, isosorbide, 2,5-bis(hydroxymethyl)tetrahydrofuran, 4,4'-isopropylidenedicyclohexanol, and 4,4'-isopropylidenebis(2,2'-hydroxyethoxycyclohexane); nitrogen-containing diols such as diethanolamine and N-methyldiethanolamine; and sulfur-containing diols such as bis(hydroxyethyl) sulfide. One of these diols may be used alone as ingredient (B), or two or more thereof may be used in combination.

Examples of combinations of a starting-material compound which gives structure (A) and a starting-material compound which gives structure (B) are as follows. Preferred starting-material compounds which give structure (A) are 2,2-dialkyl-1,3-propandiols, and 2,2-dimethyl-1,3-propanediol is more preferred.

Especially preferred of the starting-material compounds which give structure (B) and are used in combination with a starting-material compound which gives structure (A) are diols or etherdiols which have up to 20 carbon atoms. More preferred, from the standpoints of the availability and excellent properties of the starting-material diols, are ethylene glycol, 1,3-propanediol, 1,4-butanediol, 1,5-pentanediol, 1,6-hexanediol, 1,8-octanediol, 1,10-decanediol, diethylene glycol, triethylene glycol, tetraethylene glycol, 2-methyl-1,3-propanediol, 3-methyl-1,5-pentanediol, 1,4-cyclohexanedimethanol, and isosorbide.

When a polycarbonate diol obtained from a combination of any of the starting-material compounds which give structure (A) and any of the starting-material compounds which give structure (B) is used to produce a polyurethane, the solution thereof has a low viscosity and excellent handleability and has a feature that the urethane resin obtained therefrom is more flexible.

It is preferred that the polycarbonate diol of the invention should further satisfy the following expression (I).

{(The number of moles of (A) present at polymer end)/(sum of the number of moles of (A) present at polymer end and the number of moles of (B) present at polymer end)}/{(the number of moles of (A) present in the polymer)/(sum of the number of moles of (A) present in the polymer and the number of moles of (B) present in the polymer)}>1.1 (I)

Methods for determining the value of expression (I) are not particularly limited so long as the proportions in which the components are present can be determined. However, the proportions can be easily determined, for example, from the integrals of the values corresponding to $^1$H-NMR signals for the product.

There is no particular upper limit on the value of expression (I). However, the upper limit of a range in which practical production is possible is preferably 200, more preferably 100, even more preferably 50. From the standpoint of obtaining the properties according to the invention, the lower limit of the value thereof is preferably 1.1, more preferably 1.2, even more preferably 1.3, especially preferably 1.4.

Namely, the polycarbonate diol of the invention has a feature that it is preferred that (A) should account for a larger proportion of the monomer units which constitute the ends of the polymer chain. The polycarbonate diol of this structure has the feature of being apt to be liquid, having low viscosity, and being easy to handle.

Furthermore, the polyurethane produced from the polycarbonate diol of that structure has the feature of being excellent in terms of flexibility, elastic recovery, and low-temperature flexibility and bendability while retaining heat resistance, weatherability, and water resistance, which are properties of polyurethanes derived from conventional polycarbonate diols.

The reasons why such characteristic properties are obtained have not been elucidated in detail. It is, however, thought that since the dialkyl substituents of the polycarbonate diol of the invention are located in positions close to hard segments, the hard segments can be effectively inhibited from stacking, thereby enabling the polyurethane to have flexibility and attain desired properties.

The lower limit of the hydroxyl value of the polycarbonate diol of the invention is preferably 10, more preferably 20, even more preferably 35. The upper limit thereof is preferably 230, more preferably 160, even more preferably 130.

By regulating the hydroxyl value thereof so as to be not below the lower limit, the polycarbonate diol is made to have reduced viscosity and be easy to handle in polyurethane formation. By regulating the hydroxyl value thereof so as to be not higher than the upper limit, a urethane resin having sufficient strength is obtained.

The lower limit of the molecular weight distribution (Mw/Mn) of the polycarbonate diol of the invention is preferably 1.5, more preferably 2.0. Meanwhile, the upper limit thereof is preferably 3.5, more preferably 3.0. Symbols Mw and Mn indicate weight-average molecular weight and number-average molecular weight, respectively, and these molecular weights can be determined usually through an examination by gel permeation chromatography.

When the molecular weight distribution thereof is regulated so as to be not higher than the upper limit, the urethane resin produced using the polycarbonate diol tends to have improved properties. For example, the urethane resin at low temperatures is less apt to be rigid and shows improved elongation. When the molecular weight distribution thereof is regulated so as to be not below the lower limit, purification for, for example, removing oligomers is unnecessary when the polycarbonate diol is produced.

It is preferred that the polycarbonate diol of the invention should have a structure in which diols have been polymerized through carbonate groups. However, depending on production processes, there are cases where the polycarbonate diol partly further includes ether structures. In case where the amount of such ether structures is large, there is the possibility of resulting in a decrease in weatherability or heat resistance due to the ether structures. It is therefore preferred to produce the polycarbonate diol while regulating the content of ether structures so as not to be excessively high.

Consequently, the proportion of ether bonds to carbonate bonds both contained in the polycarbonate diol of the invention, excluding the bonds contained in the starting-material diols, is preferably 2/98 or less, more preferably 1/99 or less, even more preferably 0.5/99.5 or less, in terms of molar ratio.

The polycarbonate diol of the invention has the feature of being usually liquid at around room temperature and having excellent handleability. This is a property extremely advantageous for producing polyurethanes on an industrial scale, and is different from the property at room-temperature of polyhexamethylene carbonate diols, which are polycarbonates of a general grade, that is a waxy opaque solid.

The state of the polycarbonate diol of the invention can be expressed, for example, in terms of viscosity. The lower limit of the viscosity at 40°C of the polycarbonate diol is preferably 0.1 Pa·s, more preferably 1 Pa-s, even more preferably 5 Pa·s. The upper limit thereof is preferably 500 Pa-s, more preferably 200 Pa·s, even more preferably 150 Pa·s, especially preferably 120 Pa·s, most preferably 100 Pa·s. By regulating the viscosity of the polycarbonate diol so as to be within that range, the polycarbonate diol is rendered easy to handle.

It is preferred that the polycarbonate diol of the invention should have a color which does not affect the color of the urethane to be obtained. The degree of coloration thereof expressed in terms of APHA value [in accordance with JIS-K0071-1 (1998)] is 50 or less, preferably 30 or less.

<1-1. Production of the Polycarbonate Diol-containing Composition>

The polycarbonate diol of the invention is synthesized by reacting diols with a diaryl carbonate, a dialkyl carbonate, or an alkylene carbonate. Since use of a diaryl carbonate has the advantage of enabling the reaction to proceed smoothly, it is preferred to synthesize the polycarbonate diol by reacting diols with a diaryl carbonate.

In particular, diols such as 2,2-dialkyl-1,3-propanediols and 3,9-bis(1,1-dimethyl-2-hydroxyethyl)-2,4,8,10-tetraoxaspiro[5.5]undecane have low reactivity, and production of a polycarbonate diol using a dialkyl carbonate or alkylene carbonate necessitates severer reaction conditions, i.e., conditions including the use of a large amount of a catalyst or conditions which result in a decrease in the quality of the polycarbonate diol as the specified substance.

On the other hand, diaryl carbonates have excellent reactivity as compared with alkyl carbonates. Because of this, when a diaryl carbonate is used as a carbonate source, the reaction proceeds under mild conditions even when any of the diols having lower reactivity is used. Use of a diaryl carbonate hence is preferred.

<1-2. Hydroxyaryls generated as By-products>

However, when diaryl carbonates are used, hydroxyaryls (hereinafter often referred to as phenols) derived from the diaryl carbonates generate as by-products. It is therefore necessary to take care not to allow the phenols to remain in a large amount in the polycarbonate diol product. In case where phenols remain in a large amount, the phenols can be a factor which inhibits polymerization in polyurethane formation because the phenols are monofunctional compounds. In addition, the urethane bonds formed by these phenols have weak bonding force and, hence, are dissociated thermally in later steps, etc. to regenerate the isocyanate and phenols and arouse troubles. The residual phenols hence are undesirable. Furthermore, the phenols are corrosive and irritative substances and are hence undesirable.

The amount of phenols contained in the polycarbonate diol product is preferably 1% by weight or less, more preferably 0.1% by weight or less, even more preferably 0.01% by weight or less, especially preferably 0.005% by weight or less.

<1-3. Amount of Residual Starting-material Diols>

The amount of the raw material diols which were used for the production of a polycarbonate diol and which remain in the polycarbonate diol product (hereinafter sometimes referred to as "total content of residual raw material diol monomers in the polycarbonate diol-containing composition") is 2% by weight or less, preferably 1% by weight or less, more preferably 0.1% by weight or less, especially preferably 0.05% by weight or less.
By regulating the amount of the residual starting-material diols so as to be not more than the upper limit, a urethane having sufficiently long soft segments and having excellent flexibility is obtained.
The amount of the residual starting-material diols can be determined through an NMR examination, GPC examination, LC examination, or the like.

<1-4. Polymer Ends>

The polycarbonate diol of the invention basically has a hydroxyl group at each polymer end. However, there are cases where the polycarbonate diol product partly includes, as an impurity, polymer molecules which have no hydroxyl group at a polymer end.
In this case, the proportion of the impurity which has no hydroxyl group at a polymer end and which is contained in the polycarbonate diol product is preferably 5% by mole or less, more preferably 3% by mole or less, even more preferably 1% by mole or less, in terms of the number of end groups having no hydroxyl group based on all end groups.
By regulating the proportion of end groups having no hydroxyl group so as to be not higher than the upper limit, problems, for example, that a sufficiently high degree of polymerization is not attained in a polyurethane formation reaction can be avoided.
Examples of the end structures having no hydroxyl group include phenoxycarbonyl, methoxycarbonyl, ethoxycarbonyl, and olefins, although the structures vary depending on the processes used for producing the polymer.

<1-5. Amount of Residual Catalyst>

When the polycarbonate diol of the invention is produced, a transesterification catalyst can be used in order to accelerate the polymerization. In this case, the catalyst may remain in the polycarbonate diol product obtained. In case where the catalyst remains in too large an amount, there are cases where the residual catalyst accelerates a polyurethane formation reaction to a degree higher than supposed. Too large residual catalyst amounts hence are undesirable.
The amount of the catalyst remaining in the polycarbonate diol product is preferably 100 ppm by weight or less, more preferably 50 ppm by weight or less, even more preferably 10 ppm by weight or less, in terms of metal content. Examples of the kind of the residual metal include the following metals, which have the ability to catalyze transesterification.
The metal which can be used as a transesterification catalyst is not limited so long as the metal is generally regarded as a metal having the ability to catalyze transesterification. Examples of the metal include: alkali metals such as lithium, sodium, potassium, rubidium, and cesium; metals belonging to Group 2 of the periodic table, such as magnesium, calcium, strontium, and barium; transition metals such as titanium, zirconium, hafnium, cobalt, zinc, aluminum, germanium, tin, lead, antimony, and bismuth; and lanthanide metals such as lanthanum, cerium, europium, and ytterbium.
There are cases where these metals are used as the elemental metals or used as salts thereof. In the case where the metals are used as salts, examples of usable salts, besides hydroxides, include: halides such as chlorides, bromides, and iodides; carboxylates such as acetates, formates, and benzoates; sulfonates such as methanesulfonates, toluenesulfonates, and trifluoromethanesulfonates; phosphorus-containing salts such as phosphates, hydrogen phosphates, and dihydrogen phosphates; acetylacetonates; and alkoxides such as methoxides and ethoxides.
Preferred of these are the acetates, halides, and alkoxides of alkali metals, metals belonging to Group 2 of the periodic table, and transition metals. These metals and metal compounds may be used alone or in combination.
Examples of the alkali metal compounds for use as the transesterification catalyst include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium boron hydride, sodium phenyl borate, sodium benzoate, potassium benzoate, cesium benzoate, lithium benzoate, disodium hydrogen phosphate, dipotassium hydrogen phosphate, dilithium hydrogen phosphate, disodium phenyl phosphate, the disodium salt, dipotassium salt, dicesium salt, and dilithium salt of bisphenol A, and the sodium salt, potassium salt, cesium salt, and lithium salt of phenol.
Examples of the compounds of metals belonging to Group 2 of the periodic table include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium

stearate, calcium stearate, calcium benzoate, and magnesium phenyl phosphate.

Examples of the salts of transition metals include: titanium alkoxides such as tetraethyl titanate, tetraisopropyl titanate, and tetra-n-butyl titanate; halides of titanium, such as titanium tetrachloride; salts of zinc, such as zinc acetate, zinc benzoate, and zinc 2-ethylhexanoate; tin compounds such as tin(II) chloride, tin(IV) chloride, tin(II) acetate, tin(IV) acetate, dibutyltin dilaurate, dibutyltin oxide, and dibutyltin dimethoxide; salts of zirconia, such as zirconium acetylacetonate, zirconium oxyacetate, and zirconium tetrabutoxide; and lead compounds such as lead(II) acetate, lead(IV) acetate, and lead(IV) chloride.

Especially when a diaryl carbonate is used as a carbonate source, it is preferred to use, as a catalyst, a compound of a metal belonging to Group 2 of the periodic table. Use of a compound of a metal belonging to Group 2 of the periodic tale as a catalyst is effective in reducing the influence of the catalyst on polyurethane formation reactions. More preferred of the compounds of metals belonging to Group 2 of the periodic table are magnesium salts. Even more preferred are magnesium acetate, magnesium sulfate, magnesium nitrate, magnesium hydroxide, and magnesium hydrogen carbonate.

<1-6. Cyclic Carbonates generated as By-products>

There are cases where the polycarbonate diol product contains cyclic carbonates which were generated as by-products during the production. For example, there are cases where when a 2,2-dialkyl-1,3-propanediol is used as a starting-material diol, then a 5,S-dialkyl-1,3-dioxan-2-one is generated as a cyclic compound or compounds configured of, for example, two or more molecules of the dioxane derivative which have been combined into a cyclic form are further generated as cyclic compounds.

In particular, there are cases where when 2,2-dimethyl-1,3-propanediol is used as a starting-material diol, then 5,5-dimethyl-1,3-dioxan-2-one (hereinafter sometimes referred to as neopentyl carbonate) is generated as a cyclic compound or compounds configured of, for example, two or more molecules of the dioxane derivative which have been combined into a cyclic form are further generated as cyclic compounds.

Such cyclic compounds are undesirable impurities which bring about side reactions upon heating or which do not react with an isocyanate group during a polyurethane formation reaction and, hence, may remain in the resin like plasticizers to arouse troubles in the final product, etc. It is therefore preferred to remove the cyclic compounds as much as possible during the production. The content of the cyclic compounds in the polycarbonate diol product is preferably 5% by weight or less, more preferably 3% by weight or less, even more preferably 1% by weight or less, especially preferably 0.5% by weight or less.

<1-7. Carbonic Diester>

The polycarbonate diol of the invention can be produced by subjecting starting-material diols which give structures (A) and (B) described above to a transesterification reaction with a carbonic diester.

Examples of carbonic diesters (i) usable in the production of the polycarbonate diol of the invention include diaryl carbonates, dialkyl carbonates, and alkylene carbonates.

Examples of the diaryl carbonates include diphenyl carbonate, ditolyl carbonate, bis(chlorophenyl) carbonate, and m-cresyl carbonate.

Examples of the dialkyl carbonates include dimethyl carbonate, diethyl carbonate, dibutyl carbonate, dicyclohexyl carbonate, diisobutyl carbonate, ethyl n-butyl carbonate, and ethyl isobutyl carbonate.

Examples of the alkylene carbonates include ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, 2,4-pentylene carbonate, and neopentyl carbonate.

Diaryl carbonates are preferred of these because diaryl carbonates are highly reactive and enable efficient industrial production. More preferred of these is diphenyl carbonate since diphenyl carbonate can be easily available at low cost as an industrial starting material.

The amount of such carbonic diesters to be used is as follows. The lower limit of the amount thereof, in terms of the molar ratio thereof to mole of the sum of the diols, is preferably 0.60, more preferably 0.70, even more preferably 0.80, especially preferably 0.85, most preferably 0.90. The upper limit of the amount thereof is preferably 1.10, more preferably 1.05, even more preferably 1.03.

<1-8. Diols>

As the diols, use can be made of starting-material monomer diols which give structures (A) and (B) described above.

Preferred of these are 2,2-dialkyl-1,3-propanediols (ii) such as 2,2-dimethyl-1,3-propanediol, 2-ethyl-2-butyl-1,3-propanediol, 2,2-diethyl-1,3-propanediol, 2-pentyl-2-propyl-1,3-propanediol, and 2-pentyl-2-propyl-1,3-propanediol. It is more preferred that such a diol (ii) should be used in combination with a diol (iii) other than a diol (ii).

By using a diol (ii), a polycarbonate diol having reduced crystallinity can be obtained. When the polycarbonate diol having reduced crystallinity is used for urethane production, it is possible to obtain a urethane which not only has a low solution viscosity and excellent handleability but also is more flexible. In particular, use of a diol (ii) in combination with the diol (iii) brings about a feature that not only a polycarbonate diol which has a lowered melting point and is flowable even at room temperature can be obtained but also a more flexible urethane resin is obtained.

Examples of diols usable as the diol (iii) include the diols enumerated above as examples of the starting-material compound which gives structure (B). Especially preferred of these are the diols or ether diols which have up to 20 carbon atoms.

Furthermore, ethylene glycol, 1,3-propanediol, 1,4-butanediol, 1,5-pentanediol, 1,6-hexanediol, 1,8-octanediol, 1,10-decanediol, diethylene glycol, triethylene glycol, tetraethylene glycol, 2-methyl-1,3-propanediol, 3-methyl-1,5-pentanediol, 1,4-cyclohexanedimethanol, and isosorbide are more preferred from the standpoints of the excellent availability and properties of the starting-material diols.

Polyurethane production from the polycarbonate diol obtained therefrom has a feature that the solution of the polyurethane has a low viscosity and excellent handleability and a more flexible urethane resin is obtained.

<1-9. Transesterification Catalyst>

When the polycarbonate diol of the invention is produced, a transesterification catalyst may be used. Compounds which are usable in this case are as described hereinabove. However, it is preferred that such a compound should be used in such an amount that even when the compound remains in the polycarbonate diol obtained, the residual compound does not affect the performance.

The amount of the transesterification catalyst to be used, in terms of the ratio of the weight of the metal to the weight of the starting-material diols, is as follows. The upper limit thereof is preferably 500 ppm, more preferably 100 ppm, even more preferably 50 ppm. Meanwhile, the lower limit thereof is an amount in which sufficient polymerization activity is obtained, i.e., preferably 0.01 ppm, more preferably 0.1 ppm, even more preferably 1 ppm.

<1-10. Reaction Temperature>

Any desired reaction temperature can be employed for the transesterification reaction so long as a practical reaction rate is obtained at the temperature. Usually, the lower limit of the reaction temperature is preferably 70°C, more preferably 100°C, even more preferably 130°C. The upper limit of the reaction temperature is usually preferably 250°C, more preferably 230°C, even more preferably 200°C. By regulating the upper limit of the reaction temperature to that value, the polycarbonate diol to be obtained can be prevented from having quality problems such as coloration and formation of an ether structure.

Furthermore, all steps of the transesterification reaction for producing a polycarbonate diol are conducted at a reaction temperature of preferably 170°C or lower, more preferably 165°C or lower, even more preferably 160°C or lower. By regulating the reaction temperature for all these steps to 170°C or lower, the polycarbonate diol can be prevented from readily taking a color under some conditions.

<1-11. Amount of Hydroxyaryls during Reaction>

Usually, the amount of phenols contained in the solution which is being reacted for polycarbonate diol production (hereinafter sometimes referred to as "concentration of hydroxyaryls contained in the polymerization reactants") is regulated to preferably 45 wt.% or less, more preferably 30 wt.% or less, even more preferably 20 wt.% or less.

It is especially preferred that the amount of phenols contained in the solution being reacted should be kept at a value not more than the upper limit, throughout all steps of the transesterification reaction. By regulating the amount of phenols so as to be not more than the upper limit, the amount of the phenols during the transesterification reaction conducted under high-temperature conditions can be kept small to render the polycarbonate diol less apt to take a color.

Examples of methods for regulating the content of phenols to a value not higher than the upper limit include a method in which the reaction is conducted at a reduced pressure from the initial stage thereof and the phenols which have generated are distilled off.

The content of phenols can be determined, for example, by extracting part of the reaction solution from the reaction vessel at a given time interval and examining this sample by NMR, GPC, and LC analysis to determine the amount of phenols.

<1-12. Reaction Pressure>

The reaction can be conducted at ordinary pressure. However, since the transesterification reaction is an equilibrium reaction, the reaction for yielding the specified substance can be caused to proceed preferentially by distilling off the yielded low-boiling matter from the system. Consequently, it is usually preferred that reduced-pressure conditions should be employed in the latter half of the reaction to react the reactants while distilling off the low-boiling matter.

Alternatively, it is possible to use a method in which the pressure begins to be gradually lowered in the course of the reaction and the reactants are further reacted while distilling off the low-boiling matter which is being yielded. It is especially preferred that the final stage of the reaction should be conducted at a higher degree of vacuum, because the monohydric alcohols, phenols, cyclic carbonates, and the like which have been generated as by-products can be distilled off.

With respect to the reaction pressure at the time of completion of this reaction, the upper limit thereof is preferably 10 kPa, more preferably 5 kPa, even more preferably 1 kPa. It is also possible to conduct the reaction while passing inert gases, such as nitrogen, argon, and helium, through the reaction system in order to effectively distill off those low-boiling components.

In the case where a carbonic ester or diol which has a low boiling point is used in the transesterification reaction, it is possible to employ a method in which the initial stage of the reaction is conducted at around the boiling point of the carbonic ester or diol and the reaction is allowed to proceed further while gradually rising the temperature with the progress of the reaction. This method is preferred because the unreacted carbonic ester can be prevented from being distilled off in the initial stage of the reaction.

Furthermore, it is possible to attach a reflux condenser to the reaction vessel and conduct the reaction while refluxing the carbonic ester and the diol for the purpose of preventing those starting materials from being distilled off. This method is preferred because the charged raw materials do not get lost and the proportions of the materials can be precisely regulated.

<1-13. Mode of Reaction Operation>

The polymerization reaction can be conducted either batchwise or continuously. In the invention, however, it is preferred to conduct the reaction continuously, from the standpoints of product stability, etc. The apparatus to be used may be any of the tank type, tubular type, and column type, and a known polymerization vessel equipped with any of various stirring blades can, for example, be used. The atmosphere to be used when the temperature of the apparatus is being elevated is not particularly limited. It is, however, preferred to heat the apparatus in an inert gas, e.g., nitrogen gas, at ordinary or a reduced pressure, from the standpoint of product quality.

<1-14, Reaction Time>

The polymerization reaction is conducted while determining the molecular weight of the polycarbonate diol which is being yielded, and is terminated at the time when a desired molecular weight has been reached. The reaction time necessary for the polymerization varies considerably depending on the diols and carbonic ester used, whether or not a catalyst is used, and the kind of the catalyst. The reaction time hence cannot be specified unconditionally. However, the reaction time usually is preferably 50 hours or less, more preferably 20 hours or less, even more preferably 10 hours or less.

<1-15. Deactivation of the Catalyst>

In the case where a transesterification catalyst was used in the polymerization reaction, the transesterification catalyst usually remains in the polycarbonate diol obtained. There are cases where when the polycarbonate diol in which the transesterification catalyst remains is subjected to a polyurethane formation reaction, the reaction becomes unable to be controlled.

In order to diminish the influence of the residual catalyst, a known deactivator, e.g., a phosphorus compound, may be added in substantially the same molar amount as the transesterification catalyst used. Furthermore, the mixture after the addition is treated at a temperature of preferably 60-150°C, more preferably 90-120°C. Thus, the transesterification catalyst can be efficiently deactivated.

Examples of the phosphorus compound to be used for the deactivation of the transesterification catalyst include inorganic phosphoric acid compounds such as phosphoric acid and phosphorous acid and organic esters of phosphoric acid compounds, such as dibutyl phosphate, tributyl phosphate, trioctyl phosphate, triphenyl phosphate, and triphenyl phosphite.

It is preferred that the molar amount of the phosphorus compound to be used should be substantially the same

as that of the transesterification catalyst used, as stated above. Specifically, the upper limit of the amount thereof per mole of the transesterification catalyst is preferably 5 mol, more preferably 2 mol. The lower limit thereof is preferably 0.8 mol, more preferably 1.0 mol.

By regulating the amount of the phosphorus compound so as to be not less than the lower limit, the transesterification catalyst in the reaction product is sufficiently deactivated and a polycarbonate diol which, when used as a starting material for polyurethane production, has sufficiently reduced reactivity with isocyanate groups can be obtained. Furthermore, by regulating the amount of the phosphorus compound so as to be not more than the upper limit, the polycarbonate diol to be obtained can be prevented from taking a color.

Although the deactivation of the transesterification catalyst by the addition of a phosphorus compound can be conducted at room temperature, a heat treatment renders the deactivation more efficient. The upper limit of temperatures usable for this heat treatment is preferably 150°C, more preferably 120°C, even more preferably 100°C. The lower limit thereof is preferably 50°C, more preferably 60°C, even more preferably 70°C.

When the heat treatment is conducted at a temperature not lower than the lower limit, the deactivation of the transesterification catalyst is efficiently carried out without requiring much time and the catalyst is sufficiently deactivated. On the other hand, by regulating the temperature for the heat treatment so as to be not higher than the upper limit, the polycarbonate diol obtained can be prevented from having a color.

The period of reaction with the phosphorous compound is not particularly limited. However, the period thereof is usually preferably 1-5 hours.

<1-16. Purification>

The polycarbonate diol product can be purified for the purpose of removing impurities contained in the product, such as the impurity having no hydroxyl group at a polymer end, phenols, the starting-material diols and carbonic ester, low-boiling cyclic carbonates generated as by-products, and the catalyst added.

For this purification, a technique of removal by distillation can be employed for low-boiling compounds. Specific techniques for distillation are not particularly limited, and any desired technique such as, for example, vacuum distillation, steam distillation, or thin-film distillation can be employed. Of these, however, thin-film distillation is effective.

Conditions for the thin-film distillation are not particularly limited. However, the upper limit of temperatures usable for the thin-film distillation is preferably 250°C, more preferably 200°C. The lower limit thereof is preferably 120°C, more preferably 150°C.

By regulating the lower limit of temperatures usable for the thin-film distillation to that value, the effect of removal of low-boiling components is rendered sufficient. By regulating the upper limit thereof to 250°C, the polycarbonate diol to be obtained through the thin-film distillation can be prevented from taking a color.

The upper limit of pressures usable for the thin-film distillation is preferably 500 Pa, more preferably 150 Pa, even more preferably 50 Pa. By conducting the thin-film distillation at a pressure not higher than the upper limit, the effect of removing low-boiling components is sufficiently obtained.

With respect to the temperature at which the polycarbonate diol is held just before the thin-film distillation, the upper limit thereof is preferably 250°C, more preferably 150°C. The lower limit thereof is preferably 80°C, more preferably 120°C.

By holding the polycarbonate diol just before the thin-film distillation at a temperature not lower than the lower limit, the polycarbonate diol just before the thin-film distillation can be prevented from decreasing in flowability. On the other hand, by holding the polycarbonate diol at a temperature not higher than the upper limit, the polycarbonate diol to be obtained through the thin-film distillation can be prevented from taking a color.

The polycarbonate diol may be washed with water, alkaline water, acidic water, a solution of a chelating agent, or the like in order to remove water-soluble impurities. In this case, the compound to be dissolved in water can be selected at will.

<2. Polyurethane>

<2-1. Production of Polyurethane>

For a process for producing a polyurethane using the polycarbonate diol of the invention, known polyurethane formation reaction conditions employed in polyurethane production are usually used. For example, by reacting the polycarbonate diol of the invention with an organic polyisocyanate at a temperature in the range of from ordinary temperature to 200°C, a polyurethane of the invention can be produced.

It is also possible to use a method in which the polycarbonate diol of the invention is first reacted with an excess of an organic polyisocyanate to produce an isocyanate-terminated polymer and the degree of polymerization thereof is heightened by further using a chain extender to produce a polyurethane.

<2-1 -1. Isocyanate>

Examples of the organic diisocyanate to be used for producing a polyurethane using the polycarbonate diol of the invention include various known diisocyanate compounds which are aliphatic, alicyclic, or aromatic.

Representative examples thereof include any one of or a mixture of two or more of: aliphatic diisocyanates such as tetramethylene diisocyanate, hexamethylene diisocyanate, 2,2,4-trimethylhexamethylene diisocyanate, 2,4,4-trimethylhexamethylene diisocyanate, lysine diisocyanate, and dimer diisocyanates obtained by converting the carboxyl groups of dimer acids into isocyanate groups; alicyclic diisocyanates such as 1,4-cyclohexane diisocyanate, isophorone diisocyanate, 1-methyl-2,4-cyclohexane diisocyanate, 1-methyl-2,6-cyclohexane diisocyanate, 4,4'-dicyclohexylmethane diisocyanate, and 1,3-bis(isocyanatomethyl)cyclohexane; aromatic diisocyanates such as xylylene diisocyanate, 4,4'-diphenyl diisocyanate, 2,4-tolylene diisocyanate, 2,6-tolylene diisocyanate, m-phenylene diisocyanate, p-phenylene diisocyanate, 4,4'-diphenylmethane diisocyanate, 4,4'-diphenyldimethylmethane diisocyanate, 4,4'-dibenzyl diisocyanate, dialkyldiphenylmethane diisocyanates, tetraalkyldiphenylmethane diisocyanates, 1,5-naphthylene diisocyanate, 3,3'-dimethyl-4,4'-biphenylene diisocyanate, polymethylenepolyphenyl isocyanate), phenylene diisocyanate, and m-tetramethylxylylene diisocyanate; and the like.

Preferred of these organic diisocyanates are 4,4'-diphenylmethane diisocyanate, 4,4-dicyclohexylmethane diisocyanate, hexamethylene diisocyanate, and isophorone diisocyanate from the standpoints that a polyurethane having a preferred balance among properties is obtained and that these diisocyanates are industrially available at low cost and in large quantities.

<2-1-2. Chain Extender>

The chain extender to be used in producing the polyurethane of the invention is a low-molecular compound having at least two active hydrogen atoms which react with isocyanate groups. Examples thereof usually include polyols and polyamines.

Specific examples thereof include: linear diols such as ethylene glycol, diethylene glycol, 1,3-propylene glycol, 1,4-butanediol, 1,5-pentanediol, 1,6-hexanediol, 2,4-heptanediol, 1,8-octanediol, 1,4-dimethylolhexane, 1,9-nonanediol, 1,12-dodecanediol, and dimer diols; diols having one or more branches, such as 2-methyl-1,3-propanediol, 2,2-dimethyl-1,3-propanediol, 2,2-diethyl-1,3-propanediol, 2-methyl-2-propyl-1,3-propanediol, 2-ethyl-1,3-hexanediol, 2,2,4-trimethyl-1,3-pentanediol, 2-methyl-1,8-octanediol, and 2-butyl-2-ethyl-1,3-propanediol; diols having a cyclic group, such as 1,4-cyclohexanediol, 1,4-cyclohexanedimethanol, and 1,4-dihydroxyethylcyclohexane; diols having an aromatic group, such as xylylene glycol, 1,4-dihydroxyethylbenzene, and 4,4'-methylenebis(hydroxyethylbenzene); polyols such as glycerol, trimethylolpropane, and pentaerythritol; hydroxyamines such as N-methylethanolamine and N-ethylethanolamine; polyamines such as ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine; and water.

Preferred examples of the chain extender, among those examples, include 1,4-butanediol, 1,5-pentanediol, 1,6-hexanediol, 1,8-octanediol, 1,9-nonanediol, 1,4-cyclohexanedimethanol, 1,4-dihydroxyethylcyclohexane, ethylenediamine, and 1,3-diaminopropane from the standpoints that a polyurethane having a preferred balance among properties is obtained and that these compounds are industrially available at low cost and in large quantities. These chain extenders can be used either alone or in combination of two or more thereof.

<2-1-3. Chain Terminator>

A chain terminator having one active-hydrogen group can be used according to need for the purpose of regulating the molecular weight of the polyurethane to be obtained. Examples of the chain terminator include: aliphatic monools, which have a hydroxyl group, such as ethanol, propanol, butanol, and hexanol; and aliphatic monoamines, which have an amino group, such as diethylamine, dibutylamine, n-butylamine, mono ethanolamine, and diethanolamine. These compounds may be used alone or in combination of two or more thereof.

<2-1-4. Catalyst>

In those reactions for polyurethane formation, use can be made of a known urethane polymerization catalyst represented by amine catalysts such as triethylamine, N-ethylmorpholine, and triethylenediamine or organometallic salts such as tin compounds, e.g., tin-based catalysts, such as trimethyltin laurate and dibutyltin dilaurate, and titanium compounds.

<2-1-5. Polyol>

A known polyol can also be used besides the polycarbonate diol of the invention according to need. Examples of known polyols which are usable in this case include: polyethylene glycol, polypropylene glycol, and polyoxyalkylene glycols such as polyoxytetramethylene glycol (PTMG); alkylene oxide adducts of polyalcohols, such as the ethylene oxide adducts and propylene adducts of bisphenol A or glycerol; and polyester polyols, polycaprolactone polyols, and polycarbonate polyols.

Examples of the polyester polyols include polyester polyols obtained from dibasic acids such as adipic acid, phthalic acid, isophthalic acid, maleic acid, succinic acid, and fumaric acid and from glycols such as ethylene glycol, diethylene glycol, 1,3-propylene glycol, 1,4-butanediol, 1,5-pentanediol, 1,6-hexanediol, and trimethylolpropane.

Examples of the usable polycarbonate diols include homopolycarbonate diols and copolycarbonate diols which are produced from 1,4-butanediol, 1,5-pentanediol, 1,6-hexanediol, cyclohexanedimethanol, and 2-methylpropanediol.

<2-1-6. Solvent>

A solvent may be used in the reaction for polyurethane formation. Examples of preferred solvents include: amide solvents such as dimethylformamide, diethylformamide, and dimethylacetamide; sulfoxide solvents such as dimethyl sulfoxide; ether solvents such as tetrahydrofuran and dioxane; ketone solvents such as methyl isobutyl ketone, methyl ethyl ketone, and cyclohexanone; ester solvents such as methyl acetate, ethyl acetate, and butyl acetate; and aromatic hydrocarbon solvents such as toluene and xylene.

These solvents can be used alone, or a mixed solvent composed of two or more thereof can be used. Preferred of those are methyl ethyl ketone, ethyl acetate, toluene, dimethylformamide, dimethylacetamide, dimethyl sulfoxide, and the like.

It is also possible to produce an aqueous polyurethane resin dispersion from a polyurethane resin composition obtained by mixing the polycarbonate diol of the invention, an organic diisocyanate, and the low-molecular compound having at least two hydrogen atoms which react with isocyanate groups.

<2-1-7. Production Processes>

For producing a polyurethane using the reactants, use can be made of all production processes which are generally used experimentally/industrially.

Examples thereof include: a process in which the polycarbonate diol of the invention, an organic polyisocyanate, and a chain extender are reacted together (hereinafter referred to as one-stage process); and a process in which the polycarbonate diol is first reacted with an organic polyisocyanate to prepare a prepolymer terminated by an isocyanate group at each end and, thereafter, the prepolymer is reacted with a chain extender (hereinafter referred to as two-stage process).

The two-stage process, of these processes, includes a step in which the polycarbonate diol is reacted beforehand with at least an equivalent amount of an organic polyisocyanate to thereby prepare an intermediate terminated by an isocyanate at each end, the intermediate being the portion which corresponds to the soft segments of a polyurethane.

This process, in which a prepolymer is prepared first and is then reacted with a chain extender, has an advantage that it is easy to regulate the molecular weight of the soft segments. This process has the feature of enabling the polyurethane to undergo sufficient phase separation between the soft segments and the hard segments and to be apt to have desired performances.

<2-1-7-1. One-stage Process>

The one-stage process, which is also called one-shot process, is a process in which the polycarbonate diol, an organic polyisocyanate, and a chain extender are charged at once and are thereby reacted.

The amount of the organic polyisocyanate compound to be used in the one-stage process per equivalent of the sum of the number of the hydroxyl groups of the polycarbonate diol and the number of the hydroxyl groups and amino groups of the chain extender may be as follows. The lower limit thereof is usually preferably 0.7 equivalents, more preferably 0.8 equivalents, even more preferably 0.9 equivalents, especially preferably 0.95 equivalents. The upper limit thereof is usually preferably 3.0 equivalents, more preferably 2.0 equivalents, even more preferably 1.5 equivalents, especially preferably 1.1 equivalents.

By using the polyisocyanate in an amount not more than the upper limit, the unreacted isocyanate groups are prevented from causing undesirable reactions, making it easy to obtain desired properties. By using a polyisocyanate in an amount not less than the lower limit, the polyurethane and polyurethane-urea can be made to have a sufficiently increased molecular weight and to show desired performances.

The amount of the chain extender to be used is not particularly limited. However, the amount in equivalent thereof per equivalent of the number obtained by subtracting the number of isocyanate groups from the number of the hydroxyl groups of the polycarbonate diol may be as follows. The lower limit thereof is usually preferably 0.7 equivalents, more preferably 0.8 equivalents, even more preferably 0.9 equivalents, especially preferably 0.95 equivalents. The upper limit thereof is usually preferably 3.0 equivalents, more preferably 2.0 equivalents, even more preferably 1.5 equivalents, especially preferably 1.1 equivalents.

By using the chain extender in an amount not more than the upper limit, the polyurethane and polyurethane-urea obtained are prevented from being too rigid and are made to have desired properties and be easy to dissolve in solvents and easy to process. By using the chain extender in an amount not less than the lower limit, the polyurethane is prevented from being too soft and can be made to have sufficient strength, elastic recovery, and elasticity retentivity and have improved high-temperature characteristics.

<2-1-7-2. Two-stage Process>

The two-stage process is a process which is called a prepolymer process. In the two-stage process, an organic polyisocyanate compound is reacted beforehand with the polycarbonate diol in an equivalent ratio of 1.0-10.00 to produce a prepolymer terminated by an isocyanate group. Subsequently, a chain extender having active hydrogen atoms, such as a polyalcohol, an amine compound, etc., is added to the prepolymer to thereby produce a polyurethane.

The two-stage process can be conducted either without using a solvent or in the presence of a solvent. Polyurethane production by the two-stage process can be conducted by any of the following methods (1) to (3).

(1) A polyisocyanate compound is first reacted directly with the polycarbonate diol, without using a solvent, to synthesize a prepolymer, and this prepolymer as such is subjected to a subsequent chain extension reaction.
(2) A prepolymer is synthesized by method (1), and the prepolymer thereafter is dissolved in a solvent and subjected to a subsequent chain extension reaction.
(3) A polyisocyanate is reacted with the polycarbonate diol using a solvent from the beginning and, thereafter, a chain extension reaction is conducted in the solvent.

In the case of (1), it is important that a polyurethane should be obtained in the state of being coexistent with a solvent, for example, by dissolving the chain extender in a solvent before the chain extender is caused to act or by simultaneously introducing the prepolymer and the chain extender into a solvent.

The amount of the organic polyisocyanate to be used in the two-stage process, in terms of the number of isocyanate groups per equivalent of the number of the hydroxyl groups of the polycarbonate diol, may be in the following range. The lower limit thereof is usually preferably 1.0, more preferably 1.05. The upper limit thereof is usually preferably 10.0, more preferably 5.0, even more preferably 3.0.

By using the organic polyisocyanate in an amount not more than the upper limit, the excess isocyanate groups can be prevented from causing side reactions and exerting an undesirable influence on the properties of the polyurethane. By using the organic polyisocyanate in an amount not less than the lower limit, a polyurethane having a sufficiently heightened molecular weight and having sufficient strength and thermal stability is obtained.

The amount of the chain extender to be used is not particularly limited. However, the lower limit of the amount thereof in equivalent per equivalent of the isocyanate groups contained in the prepolymer is usually preferably 0.1, more preferably 0.5, even more preferably 0.8. The upper limit thereof is usually preferably 5.0, more preferably 3.0, even more preferably 2.0.

A monofunctional organic amine or alcohol may be caused to coexist when the chain extension reaction is conducted, for the purpose of regulating the molecular weight.

It is preferred that in the chain extension reaction, the ingredients should be reacted usually at 0-250°C. The temperature for the chain extension reaction varies depending on the amount of the solvent, reactivity of the starting material used, reaction equipment, etc., and is not particularly limited. When the chain extension reaction is conducted at a temperature of 0°C or higher, the reaction proceeds sufficiently and the starting material and the polymerization product show sufficient solubility, resulting in an improvement in productivity. By conducting the chain extension reaction at 250°C or lower, side reactions and decomposition of the polyurethane resin can be inhibited. The chain extension reaction may be conducted while degassing the mixture at a reduced pressure.

When the chain extension reaction is conducted, a catalyst, a stabilizer, etc. may be added according to need.

Examples of the catalyst include triethylamine, tributylamine, dibutyltin dilaurate, stannous octylate, acetic acid, phosphoric acid, sulfuric acid, hydrochloric acid, and sulfonic acids.

Examples of the stabilizer include 2,6-dibutyl-4-methylphenol, distearyl thiodipropionate, di-β-naphthylphenylenediamine, and tri(dinonylphenyl) phosphite.

It is, however, preferred that when the chain extender is a highly reactive chain extender such as, for example,

a short-chain aliphatic amine, the process should be conducted without adding a catalyst.

<2-1-8. Aqueous Polyurethane Emulsion>

It is also possible to produce an aqueous polyurethane emulsion using the polycarbonate diol of the invention.

In this case, when a prepolymer is to be produced by reacting the polycarbonate diol with an organic polyisocyanate, a compound having at least one hydrophilic functional group and at least two isocyanate-reactive groups is mixed therewith to form a prepolymer. This prepolymer is reacted with a chain extender to obtain a polyurethane emulsion.

The hydrophilic functional group of the compound having at least one hydrophilic functional group and at least two isocyanate-reactive groups is a group which can be neutralized with an alkaline group. Examples thereof include a carboxylic group and a sulfonic group.

The isocyanate-reactive groups are groups which generally react with an isocyanate to form a urethane bond or urea bond, such as, for example, hydroxyl groups, primary amino groups, and secondary amino groups. Such groups may coexist in the same molecule.

Specific examples of the compound include 2,2'-dimethylolpropionic acid, 2,2-methylolbutyric acid, and 2,2'-dimethylolvaleric acid. Examples thereof further include diaminocarboxylic acids such as, for example, lysine, cystine, and 3,5-diaminocarboxylic acid.

When the compound having at least one hydrophilic functional group and at least two isocyanate-reactive groups is to be actually used, this compound can be used with neutralization with an amine, e.g., trimethylamine, triethylamine, tri-n-propylamine, tributylamine, or triethanolamine, and an alkaline compound, e.g., sodium hydroxide, potassium hydroxide, or ammonia.

When an aqueous polyurethane emulsion is produced, the compound having at least one hydrophilic functional group and at least two isocyanate-reactive groups may be used in the following amount. The lower limit of the amount thereof based on the weight of the polycarbonate diol of the invention is usually preferably 1%, more preferably 5%, even more preferably 10%, from the standpoint of enhancing dispersibility in water.

Meanwhile, the upper limit of the amount thereof is usually preferably 50%, more preferably 40%, even more preferably 30%, from the standpoint of maintaining the properties of the polycarbonate diol of the invention.

When the aqueous polyurethane emulsion is synthesized or stored, the emulsion stability may be maintained by further using an anionic surfactant represented by higher fatty acids, resin acids, acidic aliphatic alcohols, sulfuric acid esters, higher-alkyl sulfonates, higher-alkyl sulfonates, alkylaryl sulfonates, sulfonated castor oil, sulfosuccinic acid esters, and the like, a cationic surfactant such as primary-amine salts, secondary-amine salts, tertiary-amine salts, quaternary amine salts, and pyridinium salts, a nonionic surfactant represented by known reaction products formed by the reaction of ethylene oxide with long-chain aliphatic alcohols or phenols, or the like.

When the prepolymer is to be reacted with a chain extender to obtain a polyurethane emulsion, the prepolymer may be neutralized and then dispersed in water according to need.

The aqueous polyurethane emulsion thus produced can be used in various applications. In particular, since there recently is a need for environmentally less harmful starting materials for chemical products, the aqueous polyurethane emulsion can be used as a substitute for conventional products for the purpose of avoiding the use of organic solvents.

With respect to specific applications, the aqueous polyurethane emulsion is suitable for use in applications such as, for example, water-based coating compositions, adhesives, synthetic leathers, and artificial leathers. In particular, the synthetic leather and artificial leather produced using the polycarbonate diol of the invention are excellent in terms of flexibility, elasticity, and low-temperature stretchability and give an improved feeling, because the ends of the polycarbonate diol have the structure $HOCH_2C(CH_3)_2$-. Consequently, the synthetic leather and the artificial leather can be more advantageously utilized than the leathers produced using conventional polycarbonate diols.

<2-1-9. Other Additives>

Additives such as a heat stabilizer, light stabilizer, colorant, filler, stabilizer, ultraviolet absorber, antioxidant, anti-tack agent, flame retardant, aging inhibitor, and inorganic filler can be added to or mixed with the polyurethane produced using the polycarbonate diol of the invention, unless the additive thereof impairs the properties of the polyurethane of the invention.

As the heat stabilizer, use can be made of the following compounds: phosphorus compounds such as aliphatic, aromatic, or alkyl-substituted aromatic esters of phosphoric acid or phosphorous acid, hypophosphorous acid derivatives, phenylphosphonic acid, phenylphosphinic acid, diphenylphosphonic acid, polyphosphonates, dialkylpentaerythritol diphosphites, and dialkylbisphenol A diphosphites; phenol derivatives, in particular, hindered phenol compounds; sulfur-containing compounds such as thioether compounds, dithioic acid salts, mercaptobenzimidazole compounds, thiocarbanilide compounds, and thiodipropionic acid esters; tin compounds such as tin maleate and dibutyltin monoxide; and

the like.

Specific examples of the hindered phenol compounds include Irganox 1010 (trade name; manufactured by Ciba-Geigy Ltd.) and Irganox 1520 (trade name; manufactured by Ciba-Geigy Ltd.). Examples of the phosphorus compounds include PEP-36, PEP-24G, and HP-10 [each being trade name; manufactured by Asahi Denka K.K.] and Irgafos 168 (trade name; manufactured by Ciba-Geigy Ltd.).

Specific examples of the sulfur-containing compounds include thioether compounds such as dilauryl thiopropionate (DLTP) and distearyl thiopropionate (DSTP).

Examples of the light stabilizer include benzotriazole compounds and benzophenone compounds. Specifically, "TINUVIN 622LD", "TINUVIN 765" (both manufactured by Ciba Specialty Chemicals Co.), "SANOL LS-2626", "SANOL LS-765" (both manufactured by Sankyo Co., Ltd.), and the like can, for example, be used.

Examples of the ultraviolet absorber include "TINUVIN 328" and "TINUVIN 234" (both manufactured by Ciba Specialty Chemicals Co.).

Examples of the colorant include: dyes such as direct dyes, acid dyes, basic dyes, and metal complex dyes; inorganic pigments such as carbon black, titanium oxide, zinc oxide, iron oxide, and mica; and organic pigments such as coupling azo compounds, condensation azo compounds, anthraquinone compounds, thioindigo compounds, dioxazine compounds, and phthalocyanine compounds.

Examples of the inorganic filler include short glass fibers, carbon fibers, alumina, talc, graphite, melamine, and clay.

Examples of the flame retardant include addition-type and reaction-type flame retardants such as phosphorus- and halogen-containing organic compounds, bromine- or chlorine-containing organic compounds, ammonium polyphosphate, aluminum hydroxide, and antimony oxide.

Those additives may be used alone or in combination of two or more thereof.

The amount of those additives to be added, in terms of % by weight based on the polyurethane, may be as follows. The lower limit thereof is preferably 0.01%, more preferably 0.05%, even more preferably 0.1%. The upper limit thereof is preferably 10%, more preferably 5%, even more preferably 1%.

<2-2. Polyurethane Film and Plate>

In the case where the polyurethane of the invention is used to produce a polyurethane film, the thickness of the film may be as follows. The lower limit thereof is usually preferably 10 μm, more preferably 20 μm, even more preferably 30 μm. The upper limit thereof is usually preferably 1,000 μm, more preferably 500 μm, even more preferably 100 μm.

By regulating the thickness of the polyurethane film so as to be not more than the upper limit, sufficient moisture permeability is obtained. By regulating the thickness thereof so as to be not less than the lower limit, pinholes are inhibited from being formed and the film is prevented from suffering blocking and is rendered easy to handle.

The polyurethane film is suitable for use as medical adhesive films, hygienic materials, packaging materials, decorative films, moisture-permeable materials, and the like. The film may be a film formed on a support, e.g., a cloth or nonwoven fabric, by coating fluid application thereto. In this case, the thickness of the polyurethane film itself may be smaller than 10 μm in some cases.

It is also possible to produce a polyurethane plate using the polyurethane of the invention. In this case, there is no particular upper limit on the thickness of the plate. The lower limit of the thickness thereof is usually preferably 0.5 mm, more preferably 1 mm, even more preferably 3 mm.

The polyurethane of the invention has the following tensile elongation at break when a test piece in a strip form thereof having a width of 10 mm, a length of 100 mm, and a thickness of 50 μm is examined at a temperature of 23°C and a relative humidity of 55% under the conditions of a chuck-to-chuck distance of 50 mm and a pulling rate of 500 mm/min. The lower limit of the tensile elongation at break thereof is usually preferably 300%, more preferably 400%, even more preferably 500%. The upper limit thereof is usually preferably 1,200%, more preferably 1,000%, even more preferably 800%.

When the polyurethane is regulated so as to have a tensile elongation at break which is not less than the lower limit, the polyurethane obtained is more flexible and a synthetic leather or the like which gives an improved feeling can be obtained therefrom.

With respect to the tensile strength of the polyurethane of the invention, the polyurethane may have the following tensile strength in terms of 300% modulus when a test piece in a strip form thereof having a width of 10 mm, a length of 100 mm, and a thickness of 50 μm is examined at a temperature of 23°C and a relative humidity of 55% under the conditions of a chuck-to-chuck distance of 50 mm and a pulling rate of 500 mm/min. The lower limit thereof is usually preferably 0.1 MPa or higher, more preferably 0.5 MPa or higher, even more preferably 1 MPa or higher.

The upper limit thereof is usually preferably 20 MPa or less, more preferably 15 MPa or less, even more preferably 10 MPa or less, especially preferably 9 MPa or less. By regulating the tensile strength of the polyurethane

so as to be not higher than the upper limit, sufficient flexibility is obtained. In particular, by regulating the tensile strength thereof to 9 MPa or less, the urethane obtained is prevented from being rigid and can be made to have an improved touch.

With respect to the tensile stress at rupture of the polyurethane of the invention, the polyurethane may have the following tensile stress at rupture when a test piece in a strip form thereof having a width of 10 mm, a length of 100 mm, and a thickness of 50 μm is examined at a temperature of 23°C and a relative humidity of 55% under the conditions of a chuck-to-chuck distance of 50 mm and a pulling rate of 500 mm/min. The lower limit thereof is usually preferably 40 MPa, more preferably 45 MPa, even more preferably 50 MPa. The upper limit thereof is usually preferably 80 MPa, more preferably 75 MPa, even more preferably 70 MPa.

With respect to the retention of elasticity, the retention rate of elasticity (Hr1/H1) defined as the ratio of the stress at 150% elongation measured in the first contraction to the stress at 150% elongation measured in the first extension, in a 300% stretching/contraction repetition test conducted at 23°C, is usually preferably 10% or higher, more preferably 20% or higher, even more preferably 30% or higher, especially preferably 40% or higher.

Likewise, the retention rate of elasticity (Hr5/H5) defined as the ratio of the stress at 150% elongation measured in the fifth contraction to the stress at 150% elongation measured in the fifth extension is usually preferably 30% or higher, more preferably 50% or higher, even more preferably 70% or higher, especially preferably 85% or higher.

Furthermore, the retention rate of elasticity (H2/H1) defined as the ratio of the stress at 150% elongation measured in the second extension to the stress at 150% elongation measured in the first extension, in the 300% stretching/contraction repetition test conducted at 23°C, is usually preferably 20% or higher, more preferably 40% or higher, even more preferably 50% or higher, especially preferably 60% or higher.

<2-3. Molded Polyurethane and Applications>

The polyurethane of the invention and a solution of a urethane prepolymer therefor can be made to have a variety of properties, and can be extensively used in applications such as foam, elastomers, coating compositions, fibers, adhesives, flooring materials, sealants, medical materials, artificial leathers, coating materials, and water-based polyurethane coating compositions.

In particular, when the flexible polyurethane produced using the polycarbonate diol of the invention is used in applications such as artificial leathers, synthetic leathers, water-based polyurethanes, adhesives, medical materials, flooring materials, and coating materials, then improvements in feeling, function, etc. are attained.

<2-3-1. Cast Polyurethane Elastomer>

The polyurethane of the invention and a solution of a urethane prepolymer therefor can be used to produce cast polyurethane elastomers. Examples thereof include rolls such as rolling rolls, papermaking rolls, business machines, and pretension rolls and solid tires and casters for fork lift trucks, motor vehicle newtrum, trucks, and trolleys. Examples of industrial products include conveyor belt idlers, guide rolls, pulleys, steel pipe linings, rubber screens for ore, gears, connection rings, liners, impellers for pumps, cyclone cones, and cyclone liners. Furthermore, the polyurethane and the urethane prepolymer solution can be used also in applications such as belts for OA apparatus, paper feed rolls, cleaning blades for copying, snowplows, toothed belts, and surf rollers.

<2-3-2. Thermoplastic Elastomer>

The polyurethane of the invention and a solution of a urethane prepolymer therefor are applicable also to thermoplastic elastomer applications. For example, the polyurethane and the urethane prepolymer solution can be used as tubes, hoses, and spiral tubes for pneumatic apparatus for use in the food and medical fields and for coating apparatus, analytical instrument, physical and chemical apparatus, constant delivery pumps, water treatment apparatus, and industrial robots, and as hoses for fire fighting, etc.

Furthermore, the polyurethane and the urethane prepolymer solution are usable as belts, e.g., round belts, V-belts, and flat belts, in various transmission mechanisms, spinning machines, packaging apparatus, printing machines, etc. Moreover, the polyurethane and the urethane prepolymer solution can be used in applications such as the heel tops and soles of footwear, apparatus parts such as couplings, packings, ball joints, bushings, gears, and rolls, sports goods, leisure goods, and belts for watches.

Examples of automotive parts include oil stoppers, gearboxes, spacers, chassis parts, interior parts, and tire chain substitutes. Moreover, the polyurethane and the urethane prepolymer solution can be used in applications such as films, e.g., keyboard films and automotive films, curled cords, cable sheaths, bellows, conveying belts, flexible containers, binders, synthetic leathers, dipping products, and adhesives.

<2-3-3. Solvent-based Two-pack type Coating Composition>

The polyurethane of the invention and a solution of a urethane prepolymer therefor are applicable also as solvent-based two-pack type coating compositions to wooden products such as musical instruments, household Buddhist altars, furniture, decorative plywood, and sports goods. The polyurethane and the urethane prepolymer solution are usable also as a tar-epoxy-urethane for repairing motor vehicles.

The polyurethane of the invention and a solution of a urethane prepolymer thereof can be used as a component of, for example, moisture-curing one-pack coating compositions, solvent-based coating compositions containing a blocked isocyanate, alkyd resin coating compositions, urethane-modified synthetic-resin coating compositions, ultraviolet-curing coating compositions, and water-based urethane coating compositions.

For example, the polyurethane and the urethane prepolymer solution can be applied to coating compositions for plastic bumpers, strippable paints, coating materials for magnetic tapes, overprint varnishes for floor tiles, flooring materials, paper, wood-grain-printed films, and the like, varnishes for wood, coil coating for an advanced processing, protective coatings for optical fibers, solder resists, top coats for metal printing, base coats for vapor deposition, white coats for food cans, and the like.

<2-3-4. Adhesive>

The polyurethane and the solution of a urethane prepolymer therefor both produced according to the invention can be applied as an adhesive to food packages, shoes, footwear, magnetic-tape binders, decorative paper, woods, structural members, etc., and are usable also as a component of adhesives for low-temperature use and of hot-melt adhesives.

With respect to modes in which the polyurethane of the invention is used as an adhesive, use can be made of a method in which the polyurethane obtained is dissolved in a solvent and used as a solvent-based adhesive or a method in which the polyurethane is used as a hot-melt adhesive without using a solvent.

In the case where a solvent is used, usable solvents are not particularly limited so long as the solvents are suited for the properties of the urethane obtained, and either aqueous solvents or organic solvents can be used. In particular, there recently is a growing desire for water-based adhesives obtained by dissolving or dispersing an aqueous polyurethane emulsion in an aqueous solvent, from the standpoint of diminishing environmental burden. The polyurethane of the invention is suitable also for this purpose.

The additives and aids which are in use in ordinary adhesives can be incorporated, according to need without particular limitations, into the adhesive produced using the polyurethane of the invention.

Examples of the additives include pigments, solvents, anti-blocking agents, dispersion stabilizers, viscosity modifiers, leveling agents, anti-gelling agents, light stabilizers, antioxidants, ultraviolet absorbers, heat resistance improvers, inorganic and organic fillers, plasticizers, lubricants, antistatic agents, reinforcing materials, and catalysts.

For incorporating the additives, a known technique such as, for example, stirring or a dispersion process can be employed. The adhesive of the invention thus obtained can efficiently bond metallic materials such as iron, copper, aluminum, ferrite, and plated steel sheets, resinous materials such as acrylic resins, polyester resins, ABS resins, polyamide resins, polycarbonate resins, and vinyl chloride resins, and inorganic materials such as glasses and ceramics.

<2-3-5. Binder>

The polyurethane of the invention and a solution of a urethane prepolymer therefor can be used as a binder in applications such as magnetic recording media, inks, castings, burned bricks, graft materials, microcapsules, granular fertilizers, granular agrochemicals, polymer cement mortars, resin mortars, rubber chip binders, reclaimed foam, and glass fiber sizing.

<2-3-6. Fiber Processing Agent>

The polyurethane of the invention and a solution of a urethane prepolymer therefor can be used as a component of textile processing agents in shrink proofing, crease proofing, water repellent finishing, etc.

<2-3-7. Elastic Fibers>

In the case where the polyurethane of the invention is to be used as elastic fibers, methods for forming the polyurethane into fibers are not particularly limited so long as the polyurethane can be spinned by the methods. For example, use can be made of a melt spinning method in which the polyurethane is temporarily pelletized, subsequently melted, and then directly passed through a spinning nozzle and spun.

In the case where an elastic polyurethane fiber of the invention is obtained by melt spinning, the spinning temperature is preferably 250°C or lower, more preferably 235°C or lower, and is preferably 200°C or higher.

The elastic polyurethane fiber of the invention can be used as such, i.e., as an uncoated fiber, or can be covered with another fiber and used as a covered fiber. Examples of another fiber include conventionally known fibers such as polyamide fibers, wool, cotton, and polyester fibers. In the invention, it is preferred to use polyester fibers among these.

The elastic polyurethane fiber of the invention may contain a disperse dye of the dyeing type.

Examples of specific fields where the elastic polyurethane fiber of the invention can be utilized include articles of clothing such as swimming suits, skiwear, cycling wear, leotards, lingerie, foundation garments, underwear, headgear, gloves, panty hoses, and socks, medical articles such as bandages and supporters, and non-clothing articles such as guts for tennis rackets, car-seat base threads for integral molding, and metal-coated threads for robot arms.

<2-3-7. Sealant/Caulking Material>

The polyurethane of the invention and a solution of a urethane prepolymer therefor can be used as a sealant or a caulking material in applications such as walls formed by concrete placing, induced joints, the periphery of sashes, joints in wall type PC, ALC joints, and joints between boards, a sealant for composite glasses, a sealant for heat-insulating sashes, and an automotive sealant.

<2-3-8. Medical Material>

The polyurethane of the invention and a solution of a urethane prepolymer therefor can be used as medical materials. For example, the polyurethane and the urethane prepolymer solution can be used in applications such as blood-compatible materials, e.g., tubes, catheters, mechanical hearts, artificial blood vessels, and artificial valves, and disposable materials, e.g., catheters, tubes, bags, surgical gloves, and artificial kidney potting materials.

<2-3-9. Resin Composition Curable with Actinic Energy Rays, etc.>

The polyurethane, polyurethane-urea, and solution of a urethane prepolymer therefor of the invention can be rendered usable as starting materials for UV-curing coating compositions, electron beam-curing coating compositions, photosensitive resin compositions for flexographic printing, photo-curing coating compositions for optical fibers, and the like, by modifying the ends.

In particular, a resin composition curable with actinic energy rays which is obtained by modifying the ends of the urethane compound of the invention with a radical-polymerizable group can be extensively used in various surface processing fields and cast moldings. Of such resin compositions curable with actinic energy rays, a resin composition that contains a urethane (meth)acrylate oligomer in which the radical-polymerizable groups are a (meth)acrylate has the feature of being cured to give a cured film which is excellent in terms of stain resistance and handleability.

The urethane (meth)acrylate oligomer can be produced by adding a polyisocyanate and a hydroxyalkyl (meth)acrylate optionally together with other compounds, besides the polycarbonate diol of the invention.

Examples of the polyisocyanate which can be used when the urethane (meth)acrylate oligomer is produced include the organic diisocyanates shown above and polyisocyanates such as tris(isocyanatohexyl) isocyanurate.

The hydroxyalkyl (meth)acrylate which can be used is not particularly limited so long as the (meth)acrylate is a compound which has both one or more hydroxyl groups and one or more (meth)acryloyl groups, the compound being represented by 2-hydroxyethyl (meth)acrylate.

Besides the polycarbonate diol of the invention, any of the polyols shown under <2-1-5> or the low-molecular compounds shown under <2-1-2> may, for example, be added according to need. Any desired combination of these two kinds of compounds may also be used.

For producing the urethane (meth)acrylate oligomer using the polycarbonate diol of the invention, any desired method can be employed without particular limitations. Examples thereof include the following methods (1) to (3).

(1) A prepolymer method in which the ingredients other than the hydroxyalkyl (meth)acrylate ingredient are reacted, under such conditions that isocyanate groups are present in excess, to obtain an isocyanate-terminated urethane prepolymer and this isocyanate-terminated urethane prepolymer is subsequently reacted with the hydroxyalkyl (meth)acrylate ingredient.

(2) A one-shot method in which all the ingredients are simultaneously added at once and reacted.

(3) A method in which the polyisocyanate is first reacted with the hydroxyalkyl (meth)acrylate to synthesize a urethane (meth)acrylate prepolymer which simultaneously has a (meth)acryloyl group and an isocyanate group in the molecule, and this urethane (meth)acrylate prepolymer is thereafter reacted with the polycarbonate diol of the invention and optionally with added ingredients.

Method (1) is preferred of methods (1) to (3) above, because molecular weight regulation is possible and an acryloyl group can be introduced at each of both ends. A known catalyst which is effective in this addition reaction can be used at will.

The resin composition curable with actinic energy rays which contains a urethane (meth)acrylate oligomer produced using the polycarbonate diol of the invention as a starting material may be mixed with a monomer reactive with actinic energy rays or an oligomer curable with actinic energy rays, the monomer or oligomer being not a urethane (meth)acrylate oligomer produced using the polycarbonate diol of the invention as a starting material, and with a polymerization initiator, a photosensitizer, other additives, etc.

The resin composition curable with actinic energy rays which contains a urethane (meth)acrylate oligomer produced using the polycarbonate diol of the invention as a starting material can give a cured film which has excellent stain resistance to fouling substances of ordinary homes, such as, for example, ink and ethanol, and excellent protective properties.

A layered product which includes the cured film formed as a coating film on any of various substrates is excellent in terms of design and surface protection, and can be used as a coating-substitute film. For example, the layered product can be effectively applied, for example, to interior or exterior building materials and various members for motor vehicles, domestic electrical appliances, etc.

The polycarbonate diol of the invention can be used as the carbonate component of a polyester elastomer, i.e., a polyether, polyester, or polycarbonate ester block copolymer which includes, as main components, a hard segment mainly formed from an aromatic polyester and a soft segment mainly formed from an aliphatic polyether, aliphatic polyester, or aliphatic carbonate.

Use of the polycarbonate diol of the invention as a starting material gives a soft segment which is excellent in terms of heat resistance, water resistance, etc. as compared with the case where an aliphatic polyether or an aliphatic polyester is used. The resultant polycarbonate ester elastomer, even when compared with the case of known polycarbonate diols, has satisfactory melt flowability, i.e., a melt flow rate suitable for blow molding and extrusion molding, and further has an excellent balance between the melt flowability and other properties including mechanical strength. Consequently, the polycarbonate diol of the invention is suitable for use in producing various molded materials including fibers, films, and sheets and molded materials such as, for example, elastic fibers, boots, gears, tubes, and packings.

Specifically, the polycarbonate diol of the invention can be effectively used in applications in which heat resistance and durability are required, such as the joint boots of motor vehicles and of parts of domestic electrical appliances, etc. and electric-wire covering materials.

Examples

The invention will be explained below in more detail by reference to Examples and Comparative Examples. However, the invention should not be construed as being limited to the following Examples .

[Evaluation Methods]

Evaluation methods according to the invention are explained next.

The following properties of polycarbonate diols were determined by the following methods.

o Number-average Molecular Weight

A product was dissolved in $CDCl_3$ and analyzed by $^1H$-NMR (AVANCE 400, manufactured by BRUKER) at 400 MHz. The molecular weight was calculated from the integrals of intensity values.

o Analysis for Copolymerization Ratio

A product was dissolved in $CDCl_3$ and analyzed by $^1H$-NMR (AVANCE 400, manufactured by BRUKER) at 400 MHz. The copolymerization ratio was calculated from the integrals of intensity values.

◦ Analysis for Terminal Phenyl Groups

A product was dissolved in $CDCl_3$ and analyzed by $^1H$-NMR (AVANCE 400, manufactured by BRUKER) at 400 MHz. The content of terminal phenyl groups was calculated from the integrals of intensity values. The detection limit was 500 ppm in terms of the weight of phenoxy groups (PhO-) based on the weight of the whole sample.

◦ Analysis for Ether Bonds

A product was dissolved in $CDCl_3$ and analyzed by $^1$H-NMR (AVANCE 400, manufactured by BRUKER) at 400 MHz. The detection limit was 500 ppm in terms of the weight of ether groups (-CH2OCH2-) based on the weight of the whole sample.

◦ Value of Expression (I)

A product was dissolved in $CDCl_3$ and analyzed by $^1$H-NMR (AVANCE 400, manufactured by BRUKER) at 400 MHz. The value was calculated from the integrated values.

◦ Cyclic Carbonate generated as By-product

A product was dissolved in $CDCl_3$ and analyzed by $^1$H-NMR (AVANCE 400, manufactured by BRUKER) at 400 MHz. The content of the cyclic carbonate was calculated from the integrated values.

◦ Residual Starting-material Diols and By-product Phenol (Examples 1, 2-1 (by-product phenol only), 6, and 7, Comparative Example 3-1 (by-product phenol only), and Comparative Example 4)

A product was dissolved in $CDCl_3$ and analyzed by $^1$H-NMR (AVANCE 400, manufactured by BRUKER) at 400 MHz. The contents of the diols and phenol were calculated from the integrals of intensity values. The detection limits in this analysis, in terms of the weight of each starting-material diol or phenol based on the weight of the whole sample, were 500 ppm for phenol, 0.1 wt% for 1,4-butanediol, and 500 ppm for neopentyl glycol.

◦ Residual Starting-material Diols and By-product Phenol (Examples 2-1 (residual starting-material diols only), 3-1, and 4-1 and Comparative Example 3-1 (residual starting-material diols only))

A product was dissolved in THF and subjected to GPC analysis (columns (manufactured by Tosoh Corp.), four columns of TSKgel G2000HXL; eluent, THF; column temperature, 40°C; flow rate, 1 mL/min). The contents were calculated from the measured values. The detection limits in this analysis, in terms of the weight of each starting-material diol or phenol based on the weight of the whole sample, were 50 ppm for phenol, 200 ppm for 1,6-hexanediol, and 200 ppm for neopentyl glycol.

◦ Residual Starting-material Diols (Example 5-1)

A product was dissolved in a water/acetonitrile mixed solvent and subjected to LC analysis [column (manufactured by Shiseido Co., Ltd.), CAPCELLPAK 3 μm, 150 mm (L) × 4.6 mm (I.D.); eluent, water/acetonitrile mixed solvent; column temperature, 25°C; flow rate, 0.8 mL/min; injection amount, 50 μL]. The contents were calculated from the measured values. The detection limits in this analysis, in terms of the weight of each starting-material diol based on the weight of the whole sample, were 0.1 wt% for 1,6-hexanediol and 0.1 wt% for neopentyl glycol.

◦ By-product Phenol (Example 5-1)

A product was dissolved in acetonitrile and subjected to LC analysis [column (manufactured by Shiseido Co., Ltd.), CAPCELLPAK 3 μm, 75 mm (L) × 4.6 mm (I.D.); eluent, water/acetonitrile mixed solvent; column temperature, 40°C; flow rate, 1.0 mL/min; injection amount, 10 μL]. The content was calculated from the measured values. The detection limit in this analysis, in terms of the weight of phenol based on the weight of the whole sample, was 10 ppm.

◦ Viscosity

Digital viscometer DV-II (cone-and-plate type), manufactured by Brookfield Inc., U.S.A., was used to conduct a measurement at 40°C.

◦ Chromaticity (APHA value)

The APHA value of a polycarbonate diol was determined by solutions produced by diluting a standard chromaticity solution (1,000 degrees) manufactured by Kishida Chemical Co., Ltd. and the polycarbonate diol in color comparison tubes which had an inner diameter of 20 mm and comparing the colors thereof, in accordance with JIS-K0071-1

(1998).

◦ Determination of Hydroxyl Value

The hydroxyl value of a polycarbonate diol was calculated through a measurement in the following manners.

◦ Phthalic Anhydride Method (Example 2-1 and Comparative Example 3-1)

Fourteen grams of phthalic anhydride was dissolved in 100 mL of pyridine to prepare a phthalating reagent. In 5 mL of this phthalating agent was dissolved 1.50-1.60 g of the polycarbonate diol. The resultant liquid mixture was reacted at 100°C for 1 hour, subsequently cooled to room temperature, and then diluted with 25 mL of a THF/$H_2O$ (75/25) mixed solvent. This liquid was titrated with 1 N aqueous sodium hydroxide solution, and the amount of the aqueous sodium hydroxide solution required before detection of an inflection point was determined. The same titration was conducted also with respect to a solution obtained by diluting 5 mL of the phthalating agent with 25 mL of a THF/$H_2O$ (75/25) mixed solvent (blank test).

◦ Acetic Anhydride Method (Examples 3-1, 4-1, and 5-1)

The hydroxyl value was calculated through an examination in accordance with JIS K1557-1 (2007). Sixty-four milliliters of acetic anhydride was mixed with 500 mL of dry pyridine, and 8.0 g of imidazole was added thereto to prepare an acetylating reagent. The amount of the sample to be used (m) was determined in accordance with the following equations, and a portion of the sample was weighed out.

$$m\ (g) = 561\times0.98/[\text{expected hydroxyl value (mg KOH/g)}]\times0.6$$

$$m\ (g) = 0.0098\times(\text{expected number-average molecular weight})/(\text{number of hydroxyl groups in the molecule})\times0.6$$

To the sample was added 15.0 mL of the acetylating reagent. The mixture was heated at 130°C with refluxing for 1 hour. This liquid reaction mixture was cooled to room temperature and then diluted with 80 mL of a THF/$H_2O$ (50/50) mixed solvent. This liquid was titrated with 0.5 N aqueous sodium hydroxide solution, and the amount of the aqueous sodium hydroxide solution required before detection of an inflection point was determined. The same titration was conducted also with respect to a solution obtained by diluting 15.0 mL of the acetylating reagent with 80 mL of a THF/$H_2O$ (50/50) mixed solvent (blank test).

From the thus-determined volumes of the aqueous sodium hydroxide solutions, the hydroxyl value was determined using the following equations. The number-average molecular weight was calculated from the hydroxyl value.

[Math. 1]

○ Phthalic Anhydride Method:

$$\text{OH value (mg KOH/g)} = [56.1\times(B-A)\times f]/S$$

A: amount of the 1 N aqueous sodium hydroxide solution required for titration in the main test (mL)
B: amount of the 1 N aqueous sodium hydroxide solution required for titration in the blank test (mL)
f: titer of the 1 N aqueous sodium hydroxide solution
S: sample (g)

[Math. 2]

○ Acetic Anhydride Method:

$$\text{OH value (mg KOH/g)} = [56.1\times(B-A)\times0.5\times f]/S$$

A: amount of the 0.5 N aqueous sodium hydroxide solution required for titration in the main test (mL)
B: amount of the 0.5 N aqueous sodium hydroxide solution required for titration in the blank test (mL)
f: titer of the 0.5 N aqueous sodium hydroxide solution
S: sample (g)

◦ Weight-average Molecular Weight

The polyurethane solution obtained was examined for molecular weight with a GPC apparatus manufactured by Shimadzu Corp. [column, TSKgel Super HZM-N (manufactured by Tosoh Corp.); solvent, dimethylacetamide to which lithium bromide had been added]. The weight-average molecular weight calculated for standard polystyrene was determined.

◦ Solution Viscosity

The viscosity of the polyurethane solution obtained was measured at 25°C with viscometer TV-22 (cone-and-plate type), manufactured by Toki Sangyo Co., Ltd.

◦ Film Properties

Polyurethane resin test pieces of a strip shape having a width of 10 mm, a length of 100 mm, and a thickness of 50-100 μm were examined with a tensile tester [Tensilon RTC-1210A, manufactured by Orientec Co., Ltd.]. The test was conducted under the conditions of a chuck-to-chuck distance of 50 mm, a pulling rate of 500 mm/min, and a temperature of 23°C (relative humidity, 55%).

[EXAMPLE 1]

Into a 50 mL reaction tube equipped with a stirrer, a distillate trap, and a pressure controller were introduced 4.5 g of 1,4-butanediol, 6.2 g of neopentyl glycol, 21.4 g of diphenyl carbonate, and 5 mg of magnesium acetate tetrahydrate. The atmosphere in the reaction tube was replaced with nitrogen. In an oil bath set at 200°C, the reactants were dissolved by heating and reacted for 30 minutes.

Thereafter, the pressure was lowered to 3 Torr over 5 hours and 30 minutes, during which the phenol and unreacted diols that had distilled off were removed. Subsequently, while the system was kept at 200°C and 3 Torr, the reaction mixture was reacted for 30 minutes to heighten the molecular weight of the polycarbonate diol and, simultaneously therewith, the neopentyl carbonate which had generated as a by-product was distilled off.

A polycarbonate diol product was thus yielded in an amount of 9.6 g. $^1$H-NMR analysis of the polycarbonate diol contained in the polycarbonate diol product revealed that the polycarbonate diol had a number-average molecular weight of 2,200 and a 1,4-butanediol/neopentyl glycol copolymerization ratio of 49/51, that the polycarbonate diol ends had a 1,4-butanediol/neopentyl glycol ratio of 28/72, and that the value of the left side of the following expression (I) was 1.41.

{(The number of moles of (A) present at polymer end)/(sum of the number of moles of (A) present at polymer end and the number of moles of (B) present at polymer end)}/{(the number of moles of (A) present in the polymer)/(sum of the number of moles of (A) present in the polymer and the number of moles of (B) present in the polymer)}>1.2 (I)

The polycarbonate diol product obtained was a viscous liquid at ordinary temperature and was flowable. This product had a viscosity, as measured with an E-type viscometer, of 100 Pa·s at 40°C.

Furthermore, the amounts of impurities contained in the polycarbonate diol mixture were determined by $^1$H-NMR analysis. As a result, the mixture was found to contain 1,4-butanediol and neopentyl glycol, which were the starting-material diols, in a total amount of 0.5 wt% and further contain 3.0 wt% neopentyl carbonate, which is a cyclic carbonate. However, neither a phenoxy-terminated polymer nor a polymer containing an ether bond nor phenol was detected. The

polycarbonate diol mixture was further examined for metal amount by ICP analysis, and was found to have an Mg content of 60 ppm by weight.

[COMPARATIVE EXAMPLE 1]

Into a 50 mL reaction tube equipped with a stirrer, a distillate trap, and a pressure controller were introduced 4.5 g of 1,4-butanediol, 6.2 g of neopentyl glycol, 13.2 g of ethylene carbonate, and 35 mg of a 1,4-butanediol solution of tetrabutyl titanate (3.5% Ti). The atmosphere in the reaction tube was replaced with nitrogen. In an oil bath set at 100°C, the reactants were dissolved by heating, and the temperature and the pressure were subsequently regulated to 150°C and 150 Torr, respectively, over 30 minutes.

Thereafter, the temperature and the pressure were regulated to 160°C and 50 Torr, respectively, over 4 hours and 30 minutes, during which the ethylene glycol and unreacted diols and carbonate that had distilled off were removed. Subsequently, the temperature and the pressure were regulated to 210°C and 3 Torr, respectively, over 1 hour, and the mixture was thereafter reacted for 2 hours. At this point of time, the reaction solution was sampled, and the sample was subjected to NMR analysis.

However, the polycarbonate diol obtained was found to contain 1,4-butanediol as the only diol units introduced. Namely, the neopentyl glycol was not introduced into the polymer chain.

The polycarbonate diol product obtained was solid at ordinary temperature.

[COMPARATIVE EXAMPLE 2]

Into a 50 mL reaction tube equipped with a stirrer, a distillate trap, and a pressure controller were introduced 4.5 g of 1,4-butanediol, 6.2 g of neopentyl glycol, 13.5 g of dimethyl carbonate, and 35 mg of a 1,4-butanediol solution of tetrabutyl titanate (3.5% Ti). The atmosphere in the reaction tube was replaced with nitrogen. In an oil bath set at 100°C, the reactants were dissolved by heating and then reacted for 1 hour.

Thereafter, the temperature was changed to 200°C over 3 hours, during which the methanol and unreacted diols that had distilled off were removed. Subsequently, the pressure was changed to 100 Torr over 30 minutes. Thereafter, the mixture was reacted for 1 hour and 30 minutes, during which the unreacted diols were distilled off. Finally, the pressure was changed to 3 Torr over 1 hour. Thereafter, the reaction mixture was sampled, and the sample was subjected to NMR analysis.

However, the polycarbonate diol obtained was found to contain 1,4-butanediol as the only diol units introduced, and to contain no neopentyl glycol. The polycarbonate diol product obtained was solid at ordinary temperature.

As explained above, the polycarbonate diol produced in Example 1 was a viscous liquid at ordinary temperature and was flowable. In contrast, the polycarbonate diols produced in Comparative Examples 1 and 2 were solid at ordinary temperature and had considerably poor handleability.

[EXAMPLE 2-1]

Into a 1 L separable flask made of glass and equipped with a stirrer, a distillate trap, and a pressure controller were introduced 195.0 g of 1,6-hexanediol, 207.4 g of neopentyl glycol, 715.0 g of diphenyl carbonate, and 4.6 mg of magnesium acetate tetrahydrate. The atmosphere in the flask was replaced with nitrogen. The internal temperature was elevated to 160°C to heat and dissolve the contents, and the resultant mixture was reacted for 60 minutes.

Thereafter, the pressure was lowered to 2 Torr over 2 hours, during which the mixture was reacted while distilling off the phenol and unreacted diols. Subsequently, the system was held at 160°C and 2 Torr for 60 minutes to conduct a reaction for heightening the degree of polymerization of the polycarbonate diol. Furthermore, the reaction was continued while removing the phenol by nitrogen bubbling for 12 hours at 130°C and a pressure kept at 10-20 Torr.

A polycarbonate diol product was thus yielded in an amount of 452.6 g. The polycarbonate diol contained in the polycarbonate diol product had a number-average molecular weight, as determined from the hydroxyl value, of 2,012 and a 1,6-hexanediol/neopentyl glycol copolymerization ratio of 49/51. The polycarbonate diol ends had a 1,6-hexanediol/neopentyl glycol ratio of 33/67, and the value of the left side of the following expression (I) was 1.31.

$$\{(\text{The number of moles of (A) present at polymer end})/(\text{sum of the number of moles of (A) present at polymer end and the number of moles of (B) present at polymer end})\}/\{(\text{the number of moles of (A) present in the polymer})/(\text{sum of the number of moles of (A) present in the polymer and the number of moles of (B) present in the polymer})\}>1.2 \qquad (I)$$

The polycarbonate diol product mixture obtained was a viscous liquid at ordinary temperature and was flowable. This product had a viscosity, as measured with an E-type viscometer, of 59 Pa·s at 40°C.

The amount of impurities contained in the polycarbonate diol mixture was determined by GPC and was found to be 0.9 wt% in terms of the total content of 1,6-hexanediol and neopentyl glycol, which were the starting-material diols.

Meanwhile, quantitative analysis by $^{1}$H-NMR revealed that the polycarbonate diol mixture contained 2.5 wt% neopentyl carbonate, which is a cyclic carbonate. However, neither a phenoxy-terminated polymer nor a polymer containing an ether bond nor phenol was detected.

[EXAMPLE 2-2]

Into a 1 L separable flask was introduced 80.5 g of the polycarbonate diol produced in Example 2-1 [produced from 1,6-hexanediol/neopentyl glycol; number-average molecular weight calculated from hydroxyl value, 2,012; value of the left side of expression (1), 1.31] which had been heated beforehand to a temperature (e.g., 70°C) not lower than the melting point. The flask was immersed in an oil bath set at 55°C. While thus heating the contents, dimethylformamide (DMF) was added thereto to dissolve the polycarbonate diol.

The solution began to be stirred at about 100 rpm, and 3.6 g of 1,4-butanediol and 0.014 g of Neostann U-830 (manufactured by Nitto Kasei Co., Ltd.) were added dropwise thereto. Subsequently, 20.1 g of diphenylmethane diisocyanate (MDI) was added dropwise thereto at such a rate that the temperature of the solution did not exceed 70°C. Thereafter, MDI was gradually added dropwise thereto until the weight-average molecular weight as determined by GPC exceeded about 150,000; the MDI amounted to 0.7 g. Thus, a polyurethane solution having a solid content of 30% was obtained.

This polyurethane solution had a viscosity of 30,000 mPa-s (25°C) when the weight-average molecular weight was 150,000. This polyurethane solution was applied in an even thickness on a polyethylene film with a doctor blade and dried with a dryer to obtain a polyurethane film. This film was examined for properties. As a result, the film was found to have a 300% modulus of 8.0 MPa, a tensile stress at rupture of 74 MPa, and a tensile elongation at break of 550%.

[EXAMPLE 3-1]

Into a 1 L separable flask made of glass and equipped with a stirrer, a distillate trap, and a pressure controller were introduced 213.1 g of 1,6-hexanediol, 185.9 g of neopentyl glycol, 713.1 g of diphenyl carbonate, and 4.2 mL of an aqueous solution obtained by dissolving magnesium acetate tetrahydrate (210 mg) in water (25 mL). The atmosphere in the flask was replaced with nitrogen. The internal temperature was elevated to 150°C to heat and dissolve the contents. Thereafter, the resultant mixture was reacted while elevating the internal temperature to 160°C over 30 minutes.

The pressure was thereafter lowered to 160 Torr. Subsequently, the pressure was lowered to 3 Torr over 2 hours, during which the mixture was reacted while distilling off the phenol and unreacted diols. The reaction was then further continued while removing the phenol by nitrogen bubbling for 10 hours at a temperature and a pressure kept at 150°C and 10 Torr, respectively.

A polycarbonate diol product was thus yielded in an amount of 454.3 g. The polycarbonate diol contained in this polycarbonate diol product had a number-average molecular weight, as determined from the hydroxyl value, of 1,915 and a 1,6-hexanediol/neopentyl glycol copolymerization ratio of 52/48. The polycarbonate diol ends had a 1,6-hexanediol/neopentyl glycol ratio of 33/67, and the value of the left side of expression (I) was 1.40.

The polycarbonate diol product mixture obtained was a viscous liquid at ordinary temperature and was flowable. The amounts of impurities contained in the polycarbonate diol mixture were determined by GPC, and the mixture was found to contain 0.06 wt% 1,6-hexanediol and 1.4 wt% neopentyl glycol, which were the starting-material diols, and further contain 0.05 wt% phenol.

Furthermore, quantitative analysis by $^{1}$H-NMR revealed that the polycarbonate diol mixture contained 2.5 wt% neopentyl carbonate, which is a cyclic carbonate. However, neither a phenoxy-terminated polymer nor a polymer containing an ether bond was detected.

[EXAMPLE 4-1]

The polycarbonate diol produced in Example 3-1 [number-average molecular weight calculated from hydroxyl value, 1,915; value of the left side of expression (I), 1.40] was held at 120°C to render the polycarbonate diol flowable. Thereafter, this polycarbonate diol was subjected to thin-film distillation (temperature, 180°C; pressure, 40 Pa; rotation speed, 500 rpm) at a flow rate of 7.5 g/min.

The polycarbonate diol which had undergone the thin-film distillation had a number-average molecular weight, as determined from the hydroxyl value, of 2,008 and a 1,6-hexanediol/neopentyl glycol copolymerization ratio of 52/48. The polycarbonate diol ends had a 1,6-hexanediol/neopentyl glycol ratio of 33/67, and the value of the left side of expression (I) was 1.40.

The polycarbonate diol product mixture obtained was a viscous liquid at ordinary temperature and was flowable. The amounts of impurities contained in the polycarbonate diol mixture were determined by GPC, and the mixture was found to have a content of 1,6-hexanediol, which was a starting-material diol, less than the detection limit, and contained 0.1 wt% neopentyl glycol, which was the other starting-material diol, and 0.005 wt% phenol.

Furthermore, quantitative analysis by $^1$H-NMR revealed that the polycarbonate diol mixture contained 0.5 wt% neopentyl carbonate, which is a cyclic carbonate. However, neither a phenoxy-terminated polymer nor a polymer containing an ether bond was detected.

[EXAMPLE 4-2]

Into a 1 L separable flask was introduced 64.3 g of the polycarbonate diol produced and purified by thin-film distillation in Example 4-1 (number-average molecular weight calculated from hydroxyl value, 2,008; value of the left side of expression (I), 1.40) which had been heated beforehand to a temperature (e.g., 70°C) not lower than the melting point. The flask was immersed in an oil bath set at 55°C. While thus heating the contents, dimethylformamide (DMF) was added thereto to dissolve the polycarbonate diol.

The solution began to be stirred at about 100 rpm, and 2.9 g of 1,4-butanediol and 0.014 g of Neostann U-830 were added dropwise thereto. Subsequently, 15.5 g of diphenylmethane diisocyanate (MDT) was added dropwise thereto at such a rate that the temperature of the solution did not exceed 70°C. Thereafter, MDI was gradually added dropwise thereto until the weight-average molecular weight as determined by GPC exceeded about 150,000; the MDI amounted to 1.5 g. Thus, a polyurethane solution having a solid content of 30% was obtained.

This polyurethane solution had a viscosity of 30,000 mPa·s (25°C) when the weight-average molecular weight was 150,000. This polyurethane solution was applied in an even thickness on a polyethylene film with a doctor blade and dried with a dryer to obtain a polyurethane film. This film was examined for properties. As a result, the film was found to have a 300% modulus of 7 MPa, a tensile stress at rupture of 59 MPa, and a tensile elongation at break of 530%.

[EXAMPLE 3-2]

A polyurethane formation reaction was conducted in the same manner as in Example 4-2, except that use was made of the polycarbonate diol which had been produced in Example 3-1 and had not undergone thin-film distillation [number-average molecular weight calculated from hydroxyl value, 1,915; value of the left side of expression (I), 1.40] (76.6 g). Thus, a polyurethane solution having a solid content of 30% was obtained.

This polyurethane solution had a viscosity of 30,000 mPa·s (25°C) when the weight-average molecular weight was 150,000. This polyurethane solution was applied in an even thickness on a polyethylene film with a doctor blade and dried with a dryer to obtain a polyurethane film. This film was examined for properties. As a result, the film was found to have a 300% modulus of 10 MPa, a tensile stress at rupture of 61 MPa, and a tensile elongation at break of 480%.

[EXAMPLE 5-1]

The same starting materials as in Example 3-1 were introduced into the same apparatus as in Example 3-1 in the same amounts as in Example 3-1. The atmosphere in the apparatus was replaced with nitrogen. The internal temperature was elevated to 130°C to heat and dissolve the contents. Thereafter, the pressure was lowered to 40 mmHg over 45 minutes and then lowered to 30 Torr over 1 hour and 40 minutes. Subsequently, the resultant mixture was reacted while elevating the internal temperature to 160°C and lowering the pressure to 3 Torr over 2 hours and while distilling off the phenol and unreacted diols.

The polycarbonate diol obtained [number-average molecular weight calculated from hydroxyl value, 1,957; value of the left side of expression (I), 1.27; APHA value, 20; the amounts of impurities contained (determined by LC) were 0.1 wt% 1,6-hexanediol, 0.15 wt% neopentyl glycol, and 0.026 wt% phenol; neopentyl carbonate content determined by $^1$H-NMR, 2.3 wt%; neither a phenoxy-terminated polymer nor an ether bond-containing polymer was detected] was

held at 120°C to render the polycarbonate diol flowable.

Thereafter, the polycarbonate diol was subjected to thin-film distillation (temperature, 180°C; pressure 40 Pa; rotation speed, 500 rpm) at a flow rate of 8.0 g/min. The polycarbonate diol which had undergone the thin-film distillation had a number-average molecular weight, as determined from the hydroxyl value, of 2,013 and a 1,6-hexanediol/neopentyl glycol copolymerization ratio of 55/45. The polycarbonate diol ends had a 1,6-hexanediol/neopentyl glycol ratio of 39/61, and the value of the left side of expression (I) was 1.36.

The polycarbonate diol product mixture obtained was a viscous liquid at ordinary temperature and was flowable. The amounts of impurities contained in the polycarbonate diol mixture were determined by LC. As a result, neither 1,6-hexanediol nor neopentyl glycol, which were the starting-material diols, was detected, and the mixture was found to contain 0.001 wt% phenol.

Furthermore, quantitative analysis by $^1$H-NMR revealed that the polycarbonate diol mixture contained 0.7 wt% neopentyl carbonate, which is a cyclic carbonate. However, neither a phenoxy-terminated polymer nor a polymer containing an ether bond was detected. This polycarbonate diol mixture had an APHA value of 30.

[EXAMPLE 5-2]

A polyurethane formation reaction was conducted in the same manner as in Example 4-2, except that use was made of the polycarbonate diol produced and purified by thin-film distillation in Example 5-1 (number-average molecular weight calculated from hydroxyl value, 2,013; value of the left side of expression (I), 1.36) (102 g) and that dimethylacetamide (DMAc) was used as a solvent in place of the dimethylformamide (DMF). Thus, a polyurethane solution having a solid content of 30% was obtained.

This polyurethane solution had a viscosity of 20,000 mPa.s (25°C) when the weight-average molecular weight was 150,000. This polyurethane solution was applied in an even thickness on a polyethylene film with a doctor blade and dried with a dryer to obtain a polyurethane film. This film was examined for properties. As a result, the film was found to have a 300% modulus of 6 MPa, a tensile stress at rupture of 60 MPa, and a tensile elongation at break of 620%.

[COMPARATIVE EXAMPLE 3-1]

Into a 1 L separable flask made of glass and equipped with a stirrer, a distillate trap, and a pressure controller were introduced 380.0 g of 1,6-hexanediol, 630.5 g of diphenyl carbonate, and 4.2 mg of magnesium acetate tetrahydrate. The atmosphere in the flask was replaced with nitrogen. The internal temperature was elevated to 180°C to heat and dissolve the contents, and the resultant mixture was reacted for 60 minutes.

Thereafter, the mixture was reacted while lowering the pressure to 2 Torr over 2 hours and while distilling off the phenol and unreacted diol. Subsequently, the reaction was continued while the phenol was being distilled off by nitrogen bubbling first at 180°C for 60 minutes at 2 Torr and subsequently at 160°C for 2 hours and then at 130°C for 5 hours while maintaining that pressure.

A polycarbonate diol product was thus yielded in an amount of 415.9 g. The polycarbonate diol contained in this polycarbonate diol product had a number-average molecular weight, as determined from the hydroxyl value, of 1,976.

The polycarbonate diol product obtained was a white solid at ordinary temperature. At 40°C, the polycarbonate diol product did not melt and a viscosity measurement was impossible. The amounts of impurities contained in this polycarbonate diol product were determined by GPC. As a result, the product was found to contain 0.54 wt% 1,6-hexanediol, which was the starting-material diol.

Meanwhile, quantitative analysis by $^1$H-NMR revealed that a polymer containing an ether bond was contained in an amount of 0.06 wt%. However, neither a phenoxy-terminated polymer nor phenol was detected.

[COMPARATIVE EXAMPLE 3-2]

A polyurethane solution having a solid content of 30% was obtained in the same manner as in Example 4-2, except that the polycarbonate diol produced from 1,6-hexanediol in Comparative Example 3-1 was used in place of the polycarbonate diol produced from 1,6-hexanediol/neopentyl glycol.

This polyurethane solution had a viscosity of 150,000 mPa·s (25°C) when the weight-average molecular weight was 150,000. This polyurethane solution was applied in an even thickness on a polyethylene film with a doctor blade and dried with a dryer to obtain a polyurethane film. This film was examined for properties. As a result, the film was found to have a 300% modulus of 14 MPa, a tensile stress at rupture of 83 MPa, and a tensile elongation at break of 570%.

[COMPARATIVE EXAMPLE 3-3]

A polyurethane solution having a solid content of 30% was obtained in the same manner as in Example 4-2,

except that the polycarbonate diol produced from 1,6-hexanediol in Comparative Example 3-1 was used in place of the polycarbonate diol produced from 1,6-hexanediol/neopentyl glycol, and that DMAc was used as a solvent in place of the DMF. This polyurethane solution had a viscosity of 80,000 mPa·s (25°C) when the weight-average molecular weight was 150,000. This polyurethane solution was applied in an even thickness on a polyethylene film with a doctor blade and dried with a dryer to obtain a polyurethane film. This film was examined for properties. As a result, the film was found to have a 300% modulus of 13 MPa, a tensile stress at rupture of 74 MPa, and a tensile elongation at break of 547%.

[EXAMPLE 6]

Into a 250 mL reaction tube equipped with a stirrer, a distillate trap, and a pressure controller were introduced 38.0 g of 1,6-hexanediol, 33.5 g of neopentyl glycol, 128.5 g of diphenyl carbonate, and 6.3 mg of magnesium acetate tetrahydrate. The atmosphere in the reaction tube was replaced with nitrogen. In an oil bath set at 130°C, the reactants were dissolved by heating and reacted for 10 minutes.

Thereafter, the pressure was lowered to 100 Torr over 5 minutes and then lowered to 25 Torr over 5 minutes. Subsequently, the pressure was gradually lowered from 25 Torr to 20 Torr over 1 hour while elevating the temperature of the oil bath from 130°C to 160°C. The pressure was then lowered from 20 Torr to 5 Torr over 10 minutes while distilling off the phenol and unreacted diols. Finally, the mixture was reacted for 15 minutes while keeping the temperature and the pressure at 160°C and 5 Torr, respectively, and while distilling off the phenol and unreacted diols.

The amount of the phenol contained in the solution which was being reacted was determined by $^1$H-NMR. As a result, the phenol content was found to be highest at 15 minutes after initiation of the reaction. At that point of time, the phenol accounted for 10 wt% of the reaction solution. The polycarbonate diol contained in the polycarbonate diol product had an APHA value of 20. The polycarbonate diol had a number-average molecular weight of 1,850 and a 1,6-hexanediol/neopentyl glycol copolymerization ratio of 55/45. The polycarbonate diol ends had a 1,6-hexanediol/neopentyl glycol ratio of 43/57, and the value of the left side of expression (I) was 1.27.

The polycarbonate diol product mixture obtained was a viscous liquid at ordinary temperature and was flowable. Quantitative analysis by $^1$H-NMR revealed that the polycarbonate diol product mixture contained 0.2 wt% phenol and 2.4 wt% neopentyl carbonate, which is a cyclic carbonate. However, neither a phenoxy-terminated polymer nor a polymer containing an ether bond was detected.

[EXAMPLE 7]

Into a 250 mL reaction tube equipped with a stirrer, a distillate trap, and a pressure controller were introduced 38.0 g of 1,6-hexanediol, 33.5 g of neopentyl glycol, 128.5 g of diphenyl carbonate, and 6.3 mg of magnesium acetate tetrahydrate. The atmosphere in the reaction tube was replaced with nitrogen. In an oil bath set at 160°C, the reactants were dissolved by heating and reacted for 30 minutes. Thereafter, the pressure was lowered to 100 Torr over 5 minutes and was then lowered to 5 Torr over 1 hour and 55 minutes, during which the phenol and unreacted diols that had distilled off were continuously removed. Subsequently, the mixture was reacted for 2 hours and 30 minutes while keeping the temperature and the pressure at 160°C and 5 Torr, respectively, and while distilling off the phenol and unreacted diols.

The amount of the phenol contained in the solution which was being reacted was determined by $^1$H-NMR. As a result, the phenol content was found to be highest at 30 minutes after initiation of the reaction. At that point of time, the phenol accounted for 34 wt% of the reaction solution. The polycarbonate diol contained in the polycarbonate diol product had an APHA value of 50. The polycarbonate diol had a number-average molecular weight of 2,500 and a 1,6-hexanediol/neopentyl glycol copolymerization ratio of 53/47. The polycarbonate diol ends had a 1,6-hexanediol/neopentyl glycol ratio of 35/65, and the value of the left side of expression (I) was 1.38.

The polycarbonate diol product mixture obtained was a viscous liquid at ordinary temperature and was flowable. Quantitative analysis by $^1$H-NMR revealed that the polycarbonate diol product mixture contained 0.1 wt% phenol and 1.8 wt% neopentyl carbonate, which is a cyclic carbonate. However, neither a phenoxy-terminated polymer nor a polymer containing an ether bond was detected.

In Comparative Example 4, a production process was investigated with reference to the Example 1 of Japanese Patent No. 4198940.

[COMPARATIVE EXAMPLE 4]

Into a 250 mL reaction tube equipped with a stirrer, a distillate trap, and a pressure controller were introduced 38.0 g of 1,6-hexanediol, 33.5 g of neopentyl glycol, 128.5 g of diphenyl carbonate, and 6.3 mg of magnesium acetate tetrahydrate. The atmosphere in the reaction tube was replaced with nitrogen. The reactants were heated and dissolved with an oil bath set at 100°C.

Thereafter, the temperature of the oil bath was elevated from 100°C to 180°C over 15 minutes, and the mixture

was then reacted at 180°C and ordinary pressure for 1 hour. Subsequently, the temperature of the oil bath was lowered to 120°C, and the pressure was lowered to 10 Torr over 5 minutes. Thereafter, the temperature of the oil bath was elevated from 120°C to 180°C over 4 hours, during which the phenol and unreacted diols were distilled off. Finally, the pressure was lowered to 2 Torr, and the temperature of the oil bath was thereafter elevated from 180°C to 200°C over 15 minutes. The mixture was reacted for 1 hour and 45 minutes while keeping the temperature and the pressure at 200°C and 2 Torr, respectively, and while distilling off the phenol and unreacted diols.

The amount of the phenol contained in the solution which was being reacted was determined by $^1$H-NMR. As a result, the phenol content was found to be highest at one hour and 15 minutes after initiation of the reaction. At that point of time, the phenol accounted for 49 wt% of the reaction solution. The resultant polycarbonate diol product had an APHA value of 150. The polycarbonate diol had a number-average molecular weight of 3,900 and a 1,6-hexanediol/neopentyl glycol copolymerization ratio of 68/32. The polycarbonate diol ends had a 1,6-hexanediol/neopentyl glycol ratio of 54/46, and the value of the left side of expression (1) was 1.43.

The polycarbonate diol product mixture obtained was a viscous liquid at ordinary temperature and was flowable. Quantitative analysis by $^1$H-NMR revealed that the polycarbonate diol product mixture contained 2.1 wt% neopentyl carbonate, which is a cyclic carbonate. However, neither phenol nor a phenoxy-terminated polymer nor a polymer containing an ether bond was detected.

The results of the evaluation of the polycarbonate diols are shown in Table 1, and the results of the evaluation of the polyurethanes are shown in Table 2.

[Table 1]

| | Starting materials | | | | | | Production process | | Properties of polycarbonate diol | | | | |
|---|---|---|---|---|---|---|---|---|---|---|---|---|---|
| | Diol | | | Carbonate | | | Thin-film distillation | Maximum PhOH concentration [wt%] | State (ordinary temperature) | Viscosity (40°C) [Pa·s] | APHA | Left side of expression (I) | Content of starting material diol (s) [wt%] |
| | 1,6-Hexanediol | 1,4-Butanediol | Neopentylglycol | Ethylene carbonate | Dimethyl carbonate | Diphenyl carbonate | | | | | | | |
| Example 1 | - | ○ | ○ | - | - | ○ | × | - | Viscous liquid | 100 | - | 1.41 | 0.5 |
| Comparative Example 1 | - | ○ | ○ | ○ | - | - | × | - | solid | - | - | - | - |
| Comparative Example 2 | - | ○ | ○ | - | ○ | - | × | - | **solid** | - | - | - | - |
| Example 2-1 | ○ | - | ○ | - | - | ○ | × | - | Viscous liquid | 59 | - | 1.31 | 0.9 |
| Example 3-1 | ○ | - | ○ | - | - | ○ | × | - | Viscous liquid | - | - | 1.40 | 1.46 |
| Example 4-1 | ○ | - | ○ | - | - | ○ | ○ | - | Viscous liquid | - | - | 1.40 | 0.1 |
| Example 5-1 | ○ | - | ○ | - | - | ○ | ○ | - | Viscous liquid | - | 30 | 1.36 | <0.1 |
| Comparative Example 3-1 | ○ | - | - | - | - | ○ | × | - | solid | - | - | - | 0.54 |
| Example 6 | ○ | - | ○ | - | - | ○ | - | 10 | Viscous liquid | - | 20 | 1.27 | - |
| Example 7 | ○ | - | ○ | - | - | ○ | - | 34 | Viscous liquid | - | 50 | 1.38 | - |
| Comparative Example 4 | ○ | - | ○ | - | - | ○ | - | 49 | Viscous liquid | - | 150 | 1.43 | - |

[Table 2]

| | Starting-material polycarbonate diol | Solvent | Properties of polyurethane | | | |
|---|---|---|---|---|---|---|
| | | | Solution viscosity (25°C) [MPa·s] | 300% modulus [MPa] | Tensile stress at rupture [MPa] | Tensile elongation at break |
| Example 2-2 | Example 2-1 | DMF | 30,000 | 8 | 74 | 550% |
| Example 3-2 | Example 3-1 | DMF | 30,000 | 10 | 61 | 480% |
| Example 4-2 | Example 4-1 | DMF | 30,000 | 7 | 59 | 530% |
| Example 5-2 | Example 5-1 | DMAc | 20,000 | 6 | 60 | 620% |
| Comparative Example 3-2 | Comparative Example 3-1 | DMF | 150,000 | 14 | 83 | 570% |
| Comparative Example 3-3 | Comparative Example 3-1 | DMAc | 80,000 | 13 | 74 | 547% |

From a comparison in evaluation results among the polyurethanes obtained in the Examples and Comparative Examples, it can be seen that the polyurethanes obtained from polycarbonate diols of the invention produced using neopentyl glycol as one of the starting materials have a low solution viscosity and satisfactory handleability. Furthermore, these polyurethanes were found to be highly flexible, from the results concerning each of 300% modulus, tensile stress at rupture, and tensile elongation at break obtained in the tensile test.

While the invention has been described in detail and with reference to specific embodiments thereof, it will be apparent to one skilled in the art that various changes and modifications can be made therein without departing from the scope thereof. This application is based on a Japanese patent application filed on December 17, 2009 (Application No. 2009-286782) and a Japanese patent application filed on September 6, 2010 (Application No. 2010-199238).

Industrial Applicability

The polycarbonate diol of the invention is liquid at ordinary temperature and has excellent handleability. Moreover, the polyurethane of the invention has a low solution viscosity. The polyurethane hence has satisfactory handleability and is easy to process or apply.

Furthermore, the polyurethane of the invention is expected to be excellent in terms of flexibility, elastic recovery, and low-temperature flexibility and bendability while retaining heat resistance, weatherability, and water resistance, which are properties of the polyurethanes derived from conventional polycarbonate diols.

For example, artificial leathers produced using the polyurethane of the invention give an improved feeling, are flexible, and have high heat resistance, and the polyurethane of the invention and coating compositions produced using the polyurethane have enhanced soft-touch characteristics and improved handleability. The polyurethane of the invention hence is expected to be exceedingly useful industrially.

## Claims

1. A polycarbonate diol-containing composition obtainable by polymerizing a diaryl carbonate (i), a 2,2-dialkyl-1,3-propanediol (ii), and a diol (iii) other than a 2,2-dialkyl-1,3-propanediol, in the presence of a metal compound catalyst, wherein a total content of residual monomers of the (ii) and (iii) above in the composition is 2% by weight or less; wherein the polycarbonate diol-containing composition has a Hazen color number [APHA value; in accordance with JIS-K0071-1 (1998)] of 50 or less.

2. The polycarbonate diol-containing composition according to claim 1, which has a 5,5-dialkyl-1,3-dioxan-2-one content of 3% by weight or less.

3. The polycarbonate diol-containing composition according to claim 1, which has a hydroxyaryl content of 1% by weight or less.

4. The polycarbonate diol-containing composition according to any one of claims 1 to 3, wherein the metal compound catalyst includes, as the metal of the compound, a metal belonging to Group 2 of the periodic table.

5. The polycarbonate diol-containing composition according to any one of claims 1 to 4, wherein the remaining amount of the metal compound catalyst is 100 ppm by weight or less in terms of the metal content.

6. The polycarbonate diol-containing composition according to any one of claims 1 to 5, wherein the polycarbonate diol comprises: a repeating unit represented by the following formula (A) (hereinafter, the unit being referred to simply as (A)); a repeating unit represented by the following formula (B) and having a structure different from the structure of (A) (hereinafter the unit being referred to simply as (B)); and has a hydroxyl group at both ends of the polymer chain,

the polycarbonate diol has a proportion of (A) to (B) of (A)/(B)=99/1 to 1/99 in terms of molar ratio, has a number-average molecular weight of 500-10,000, and satisfies the following expression (I):

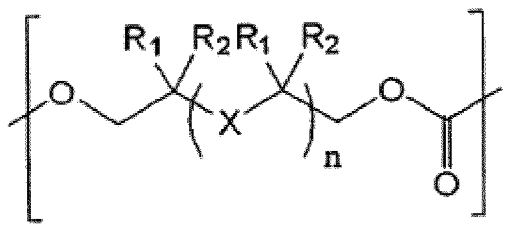

(A)

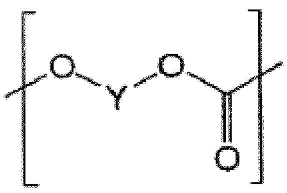

(B)

in the formulae, n is 0 or 1, and $R_1$ and $R_2$ each independently are a group selected from the group consisting of alkyl, aryl, alkenyl, alkynyl, and alkoxy groups, which have 1-15 carbon atoms and may have an oxygen atom, a sulfur atom, a nitrogen atom, a halogen atom or a substituent containing any of these atoms, so long as the number of carbon atoms is within that range; X and Y each independently represent a divalent group which has 1-15 carbon atoms and may have a heteroatom;

{(The number of moles of (A) present at polymer end)/(sum of the number of moles of (A) present at polymer end and the number of moles of (B) present at polymer end)}/{(the number of moles of (A) present in the polymer)/(sum of the number of moles of (A) present in the polymer and the number of moles of (B) present in the polymer)}>1.2 (I);

wherein the number-average molecular weight is determined by gel permeation chromatography.

7. The polycarbonate diol-containing composition according to claim 6, wherein the proportion of (A) to (B) is (A)/(B)=80/20 to 20/80 in terms of molar ratio.

8. The polycarbonate diol-containing composition according to claim 6 or 7, wherein in formula (A), n=0 and $R_1$ and $R_2$ each independently are an alkyl group having 1-5 carbon atoms.

9. The polycarbonate diol-containing composition according to any one of claims 1 to 8, wherein the proportion of ether bonds to carbonate bonds contained in the polycarbonate diol is 2/98 or less in terms of molar ratio.

**10.** The polycarbonate diol-containing composition according to any one of claims 1 to 9, which has a viscosity at 40°C of 0.1-500 Pa·s, wherein the viscosity is determined at 40°C using a digital viscometer DV-II (cone-and-plate type), manufactured by Brookfield Inc., U.S.A..

**11.** A process for producing a polycarbonate diol-containing composition, which comprises: a polymerization reaction step in which a diaryl carbonate (i), a 2,2-dialkyl-1,3-propanediol (ii), and a diol (iii) other than a 2,2-dialkyl-1,3-propanediol are polymerized in the presence of a metal compound catalyst to obtain a polymerization reaction composition containing a polycarbonate diol; and a purification step in which the polymerization reaction composition is subjected to a thin-film distillation.

**12.** The process for producing a polycarbonate diol-containing composition according to claim 11, wherein the concentration of residual monomers of the (ii) and (iii) above contained in the polymerization reaction composition is reduced in the purification step.

**13.** A process for producing a polycarbonate diol-containing composition by polymerizing a diaryl carbonate (i), a 2,2-dialkyl-1,3-propanediol (ii), and a diol (iii) other than a 2,2-dialkyl-1,3-propanediol, in the presence of a metal compound catalyst, wherein in the polymerization reaction, the content of hydroxyaryls in the polymerization reactants is 45% by weight or less.

**14.** The process for producing a polycarbonate diol-containing composition according to any one of claims 11 to 13, wherein the polymerization reaction is conducted at a reaction temperature of 170°C or less.

**15.** A polyurethane obtainable by using the polycarbonate diol-containing composition according to any one of claims 1 to 10.

**16.** The polyurethane according to claim 15, which has a tensile elongation at break of 300% or more, when a test piece in a strip form thereof having a width of 10 mm, a length of 100 mm, and a thickness of 50-100 $\mu$m is examined at a temperature of 23°C and a relative humidity of 55% under the conditions of a chuck-to-chuck distance of 50 mm and a pulling rate of 500 mm/min.

**17.** The polyurethane according to claim 15, which has a 300% modulus of 20 MPa or less when a test piece in a strip form thereof having a width of 10 mm, a length of 100 mm, and a thickness of 50-100 $\mu$m is examined at a temperature of 23°C and a relative humidity of 55% under the conditions of a chuck-to-chuck distance of 50 mm and a pulling rate of 500 mm/min.

**18.** A process for producing a polyurethane, which comprises: reacting (a) an organic polyisocyanate compound with (b) the polycarbonate diol contained in the polycarbonate diol-containing composition according to any one of claims 1 to 10 to obtain a prepolymer; and reacting the prepolymer with (c) a chain extender.

**19.** A process for producing a polyurethane, which comprises: at once mixing (a) an organic polyisocyanate compound, (b) the polycarbonate diol contained in the polycarbonate diol-containing composition according to any one of claims 1 to 10 and (c) a chain extender; and then reacting the mixture.

**20.** An article obtainable by using the polyurethane according to any one of claims 15 to 17, wherein the article is selected from an artificial leather, a synthetic leather, a coating composition, a coating material, an elastic fiber, a water-based polyurethane coating composition, a medical material, or an adhesive.

**21.** A resin composition curable with actinic energy ray, which is obtainable by using the polycarbonate diol-containing composition according to any one of claims 1 to 10.

**Patentansprüche**

**1.** Eine Polycarbonatdiol enthaltende Zusammensetzung, erhältlich durch Polymerisieren eines Diarylcarbonats (i), eines 2,2-Dialkyl-1,3-propandiols (ii) und eines Diols (iii), das von einem 2,2-Dialkyl-1,3-propandiol verschieden ist, in Gegenwart eines Metallverbindungskatalysators, wobei ein Gesamtgehalt an Restmonomeren von vorstehenden (ii) und (iii) in der Zusammensetzung 2 Gew.-% oder weniger beträgt; wobei die Polycarbonatdiol enthaltende Zusammensetzung einen Hazen-Farbzahlwert [APHA-Wert; gemäß JIS-K0071-1 (1998)] von 50 oder weniger aufweist.

2. Die Polycarbonatdiol enthaltende Zusammensetzung gemäß Anspruch 1, welche einen Gehalt an 5,5-Dialkyl-1,3-dioxan-2-on von 3 Gew.-% oder weniger aufweist.

3. Die Polycarbonatdiol enthaltende Zusammensetzung gemäß Anspruch 1, welche einen Hydroxyarylgehalt von 1 Gew.-% oder weniger aufweist.

4. Die Polycarbonatdiol enthaltende Zusammensetzung gemäß einem der Ansprüche 1 bis 3, wobei der Metallverbindungskatalysator als das Metall der Verbindung ein Metall, welches zur Gruppe 2 des Periodensystems gehört, enthält.

5. Die Polycarbonatdiol enthaltende Zusammensetzung gemäß einem der Ansprüche 1 bis 4, wobei die verbleibende Menge des Metallverbindungskatalysators 100 Gew.-ppm oder weniger, bezogen auf den Metallgehalt, beträgt.

6. Die Polycarbonatdiol enthaltende Zusammensetzung gemäß einem der Ansprüche 1 bis 5, wobei das Polycarbonatdiol umfasst: eine Wiederholungseinheit, dargestellt durch die nachstehende Formel (A) (wobei die Einheit im Folgenden einfach als (A) bezeichnet wird); eine Wiederholungseinheit, dargestellt durch die folgende Formel (B), welche eine Struktur aufweist, die sich von der Struktur von (A) unterscheidet (wobei die Einheit im Folgenden einfach als (B) bezeichnet wird); und eine Hydroxylgruppe an beiden Enden der Polymerkette aufweist,

wobei das Polycarbonatdiol ein Verhältnis von (A) zu (B) von (A)/(B) = 99/1 bis 1/99, bezogen auf das molare Verhältnis, aufweist, ein Zahlenmittel des Molekulargewichts von 500-10,000 aufweist, und den nachstehenden Ausdruck (I) erfüllt:

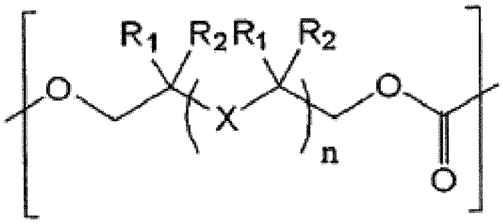

(A)

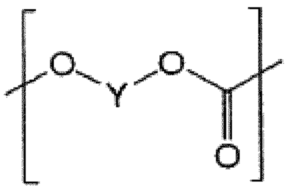

(B)

;

in den Formeln n gleich 0 oder 1 ist, und $R_1$ und $R_2$ jeweils unabhängig eine Gruppe, ausgewählt aus der Gruppe bestehend aus Alkyl-, Aryl-, Alkenyl-, Alkinyl- und Alkoxygruppen darstellen, welche 1-15 Kohlenstoffatome aufweisen und ein Sauerstoffatom, ein Schwefelatom, ein Stickstoffatom, ein Halogenatom oder einen Substituenten, enthaltend ein beliebiges dieser Atome, aufweisen können, solange die Anzahl der Kohlenstoffatome innerhalb dieses Bereichs liegt; X und Y jeweils unabhängig eine zweiwertige Gruppe, welche 1-15 Kohlenstoffatome aufweist und ein Heteroatom aufweisen kann, darstellen;

{(Anzahl an Molen von (A), welche am Polymerende vorliegen) / (Summe der Anzahl an Molen von (A), welche am Polymerende vorliegen und der Anzahl an Molen von (B), welche am Polymerende vorliegen)} / {(Anzahl von Molen von (A), welche in dem Polymer vorliegen) / (Summe der Anzahl von Molen von (A), welche in dem Polymer vorliegen und der Anzahl von Molen von (B), welche in dem Polymer vorliegen)} > 1.2 (I);

wobei das Zahlenmittel des Molekulargewichts durch Gelpermeationschromatographie bestimmt wird.

**7.** Die Polycarbonatdiol enthaltende Zusammensetzung gemäß Anspruch 6, wobei das Verhältnis von (A) zu (B) gleich (A)/(B) = 80/20 bis 20/80 ist, bezogen auf das molare Verhältnis, beträgt.

**8.** Die Polycarbonatdiol enthaltende Zusammensetzung gemäß Anspruch 6 oder 7, wobei in Formel (A) n = 0 ist und $R_1$ und $R_2$ jeweils unabhängig eine Alkylgruppe mit 1-5 Kohlenstoffatomen sind.

**9.** Die Polycarbonatdiol enthaltende Zusammensetzung gemäß einem der Ansprüche 1 bis 8, wobei das Verhältnis von Etherbindungen zu Carbonatbindungen, welche in dem Polycarbonatdiol enthalten sind, 2/98 oder weniger, bezogen auf das molare Verhältnis, beträgt.

**10.** Die Polycarbonatdiol enthaltende Zusammensetzung gemäß einem der Ansprüche 1 bis 9, welche eine Viskosität bei 40°C von 0,1-500 Pa·s aufweist, wobei die Viskosität bei 40°C unter Verwendung eines digitalen Viskometers DV-II (vom Kegel- und Plattentyp), hergestellt durch Brookfield Inc., U.S.A., bestimmt wird.

**11.** Ein Verfahren zur Herstellung einer Polycarbonatdiol enthaltenden Zusammensetzung, welches umfasst: einen Polymerisationsreaktionsschritt, in welchem ein Diarylcarbonat (i), ein 2,2-Dialkyl-1,3-propandiol (ii) und ein Diol (iii), das von einem 2,2-Dialkyl-1,3-propandiol verschieden ist, in Gegenwart eines Metallverbindungskatalysators polymerisiert werden, um eine Polymerisationsreaktionszusammensetzung enthaltend ein Polycarbonatdiol zu erhalten; und einen Reinigungsschritt, in welchem die Polymerisationsreaktionszusammensetzung einer Dünnschichtdestillation unterzogen wird.

**12.** Das Verfahren zur Herstellung einer Polycarbonatdiol enthaltenden Zusammensetzung gemäß Anspruch 11, wobei die Konzentration von Restmonomeren von vorstehenden (ii) und (iii), die in der Polymerisationsreaktionszusammensetzung enthalten sind, in dem Reinigungsschritt reduziert wird.

**13.** Ein Verfahren zur Herstellung einer Polycarbonatdiol enthaltenden Zusammensetzung durch Polymerisieren eines Diarylcarbonats (i), eines 2,2-Dialkyl-1,3-propandiols (ii) und eines Diols (iii), das von einem 2,2-Dialkyl-1,3-propandiol verschieden ist, in Gegenwart eines Metallverbindungskatalysators, wobei in der Polymerisationsreaktion der Gehalt von Hydroxyarylen in den Polymerisationsreaktanten 45 Gew.-% oder weniger beträgt.

**14.** Das Verfahren zur Herstellung einer Polycarbonatdiol enthaltenden Zusammensetzung gemäß einem der Ansprüche 11 bis 13, wobei die Polymerisationsreaktion bei einer Reaktionstemperatur von 170°C oder weniger durchgeführt wird.

**15.** Ein Polyurethan, erhältlich unter Verwendung der Polycarbonatdiol enthaltenden Zusammensetzung gemäß einem der Ansprüche 1 bis 10.

**16.** Das Polyurethan gemäß Anspruch 15, welches eine Zugdehnung bei Bruch von 300% oder mehr aufweist, wenn ein streifenförmiges Prüfstück davon mit einer Breite von 10 mm, einer Länge von 100 mm und einer Dicke von 50-100 μm bei einer Temperatur von 23°C und einer relativen Feuchte von 55% unter den Bedingungen eines Abstandes von Einspannvorrichtung zu Einspannvorrichtung von 50 mm und einer Ziehgeschwindigkeit von 500 mm/min untersucht wird.

**17.** Das Polyurethan gemäß Anspruch 15, welches einen 300% Modul von 20 MPa oder weniger aufweist, wenn ein streifenförmiges Prüfstück davon mit einer Breite von 10 mm, einer Länge von 100 mm und einer Dicke von 50-100 μm bei einer Temperatur von 23°C und einer relativen Feuchte von 55% unter den Bedingungen eines Abstandes von Einspannvorrichtung zu Einspannvorrichtung von 50 mm und einer Ziehgeschwindigkeit von 500 mm/min untersucht wird.

**18.** Ein Verfahren zur Herstellung eines Polyurethans, welches umfasst: Umsetzen (a) einer organischen Polyisocyanatverbindung mit (b) dem Polycarbonatdiol, welches in der Polycarbonatdiol enthaltenden Zusammensetzung gemäß einem der Ansprüche 1 bis 10 enthalten ist, um ein Präpolymer zu erhalten; und Umsetzen des Präpolymers mit (c) einem Kettenverlängerer.

**19.** Ein Verfahren zur Herstellung eines Polyurethans, welches umfasst: auf einmal Mischen von (a) einer organischen Polyisocyanatverbindung, (b) des Polycarbonatdiols, welches in der Polycarbonatdiol enthaltenden Zusammensetzung gemäß einem der Ansprüche 1 bis 10 enthalten ist, und (c) eines Kettenverlängerers; und dann Umsetzen des Gemischs.

**20.** Ein Gegenstand, erhältlich durch Verwendung des Polyurethans gemäß einem der Ansprüche 15 bis 17, wobei der Gegenstand aus einem Kunstleder, einem synthetischen Leder, einer Beschichtungszusammensetzung, einem Beschichtungsmaterial, einer elastischen Faser, einer Polyurethanbeschichtungszusammensetzung auf Wasserbasis, einem medizinischen Material oder einem Klebstoff ausgewählt ist.

**21.** Eine durch aktinische Energiestrahlung härtbare Harzzusammensetzung, welche unter Verwendung der Polycarbonatdiol enthaltenden Zusammensetzung gemäß einem der Ansprüche 1 bis 10 erhältlich ist.

## Revendications

**1.** Composition contenant un polycarbonate diol pouvant être obtenue par polymérisation d'un carbonate de diaryle (i), d'un 2,2-dialkyl-1,3-propanediol (ii), et d'un diol (iii) autre qu'un 2,2-dialkyl-1,3-propanediol, en présence d'un catalyseur composé métallique, dans laquelle la teneur totale en monomères résiduels de (ii) et (iii) ci-dessus dans la composition est de 2 % en poids ou moins ; laquelle composition contenant un polycarbonate diol a un indice de couleur Hazen [valeur APHA ; conformément à la norme JIS-K0071-1 (1998)] de 50 ou moins.

**2.** Composition contenant un polycarbonate diol selon la revendication 1, qui a une teneur en 5,5-dialkyl-1,3-dioxan-2-one de 3 % en poids ou moins.

**3.** Composition contenant un polycarbonate diol selon la revendication 1, qui a une teneur en hydroxyaryle de 1 % en poids ou moins.

**4.** Composition contenant un polycarbonate diol selon l'une quelconque des revendications 1 à 3, dans laquelle le catalyseur composé métallique contient, en tant que métal du composé, un métal appartenant au Groupe 2 du Tableau Périodique.

**5.** Composition contenant un polycarbonate diol selon l'une quelconque des revendications 1 à 4, dans laquelle la quantité restante du catalyseur composé métallique est de 100 ppm en poids ou moins en termes de teneur en métal.

**6.** Composition contenant un polycarbonate diol selon l'une quelconque des revendications 1 à 5, dans laquelle le polycarbonate diol comprend : un motif répétitif représenté par la formule (A) qui suit (le motif étant ci-après simplement désigné par (A)) ; un motif répétitif représenté par la formule (B) qui suit et ayant une structure différente de la structure de (A) (le motif étant ci-après simplement désigné par (B)) ; et a un groupe hydroxyle aux deux extrémités de la chaîne polymère,

le polycarbonate diol a une proportion de (A) par rapport à (B) (A)/(B) de 99/1 à 1/99 en termes de rapport molaire, a une masse moléculaire moyenne en nombre de 500 à 10 000, et satisfait à l'expression (I) qui suit :

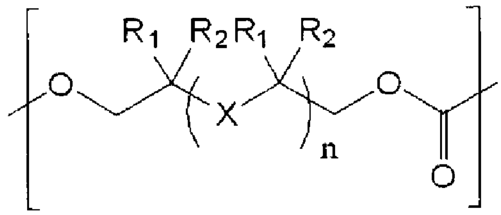

(A)

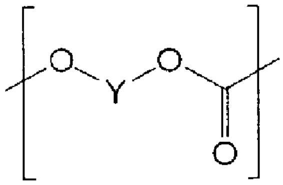

(B)

dans les formules, n vaut 0 ou 1, et chacun de $R_1$ et $R_2$ est indépendamment un groupe choisi dans l'ensemble constitué par les groupes alkyles, aryles, alcényles, alcynyles et alcoxys, qui ont 1 à 15 atomes de carbone et peuvent avoir un atome d'oxygène, un atome de soufre, un atome d'azote, un atome d'halogène ou un substituant contenant n'importe lesquels de ces atomes, du moment que le nombre d'atomes de carbone est situé à l'intérieur de cette plage ; chacun de X et Y représente indépendamment un groupe divalent qui a 1 à 15 atomes de carbone et peut avoir un hétéroatome ;

{(le nombre de moles de (A) présents à l'extrémité du polymère) / (la somme du nombre de moles de (A) présents à l'extrémité du polymère et du nombre de moles de (B) présents à l'extrémité du polymère)} / {(le nombre de moles de (A) présents dans le polymère) / (la somme du nombre de moles de (A) présents dans le polymère et du nombre de moles de (B) présents dans le polymère)} > 1,2 (I) ;

dans laquelle la masse moléculaire moyenne en nombre est déterminée par chromatographie par perméation de gel.

7. Composition contenant un polycarbonate diol selon la revendication 6, dans laquelle la proportion de (A) par rapport à (B) (A)/(B) est de 80/20 à 20/80 en termes de rapport molaire.

8. Composition contenant un polycarbonate diol selon la revendication 6 ou 7, dans laquelle, dans la formule (A), n = 0 et chacun de $R_1$ et $R_2$ est indépendamment un groupe alkyle ayant 1 à 5 atomes de carbone.

9. Composition contenant un polycarbonate diol selon l'une quelconque des revendications 1 à 8, dans laquelle la proportion de liaisons éthers par rapport aux liaisons carbonates contenues dans le polycarbonate diol est de 2/98 ou moins en termes de rapport molaire.

10. Composition contenant un polycarbonate diol selon l'une quelconque des revendications 1 à 9, qui a une viscosité à 40 °C de 0,1 à 500 Pa·s, dans laquelle la viscosité est déterminée à 40 °C par utilisation d'un viscosimètre numérique DV-II (du type à cône et plan), fabriqué par Brookfield Inc., Etats-Unis d'Amérique.

11. Procédé pour produire une composition contenant un polycarbonate diol, qui comprend : une étape de réaction de polymérisation dans laquelle un carbonate de diaryle (i), un 2,2-dialkyl-1,3-propanediol (ii), et un diol (iii) autre qu'un 2,2-dialkyl-1,3-propanediol sont polymérisés en présence d'un catalyseur composé métallique pour obtenir une composition de réaction de polymérisation contenant un polycarbonate diol ; et une étape de purification dans laquelle la composition de réaction de polymérisation est soumise à une distillation en couche mince.

12. Procédé pour produire une composition contenant un polycarbonate diol selon la revendication 11, dans lequel la concentration de monomères résiduels de (ii) et (iii) ci-dessus contenus dans la composition de réaction de polymérisation est réduite dans l'étape de purification.

13. Procédé pour produire une composition contenant un polycarbonate diol par polymérisation d'un carbonate de diaryle (i), d'un 2,2-dialkyl-1,3-propanediol (ii), et d'un diol (iii) autre qu'un 2,2-dialkyl-1,3-propanediol, en présence d'un catalyseur composé métallique, dans lequel, dans la réaction de polymérisation, la teneur en hydroxyaryles dans les réactifs de polymérisation est de 45 % en poids ou moins.

14. Procédé pour produire une composition contenant un polycarbonate diol selon l'une quelconque des revendications 11 à 13, dans lequel la réaction de polymérisation est effectuée à une température réactionnelle de 170 °C ou moins.

15. Polyuréthane pouvant être obtenu par utilisation de la composition contenant un polycarbonate diol selon l'une quelconque des revendications 1 à 10.

16. Polyuréthane selon la revendication 15, qui a un allongement à la rupture en traction de 300 % ou plus, quand une éprouvette de celui-ci sous la forme d'une bande ayant une largeur de 10 mm, une longueur de 100 mm et une épaisseur de 50 à 100 $\mu$m est examinée à une température de 23 °C et sous une humidité relative de 55 % dans des conditions d'une distance de mandrin à mandrin de 50 mm et d'une vitesse de traction de 500 mm/min.

17. Polyuréthane selon la revendication 15 qui a un module à 300 % de 20 MPa ou moins quand une éprouvette de celui-ci sous la forme d'une bande ayant une largeur de 10 mm, une longueur de 100 mm et une épaisseur de 50 à 100 $\mu$m est examinée à une température de 23 °C et sous une humidité relative de 55 % dans des conditions d'une distance de mandrin à mandrin de 50 mm et d'une vitesse de traction de 500 mm/min.

18. Procédé pour produire un polyuréthane, qui comprend : la réaction (a) d'un composé polyisocyanate organique avec (b) le polycarbonate diol contenu dans la composition contenant un polycarbonate diol selon l'une quelconque des revendications 1 à 10 pour obtenir un prépolymère ; et la réaction du prépolymère avec (c) un agent d'allongement de chaîne.

19. Procédé pour produire un polyuréthane, qui comprend : en même temps le mélange (a) d'un composé polyisocyanate organique, (b) du polycarbonate diol contenu dans la composition contenant un polycarbonate diol selon l'une quelconque des revendications 1 à 10, et (c) d'un agent d'allongement de chaîne ; et ensuite la réaction du mélange.

20. Article pouvant être obtenu par utilisation du polyuréthane selon l'une quelconque des revendications 15 à 17, lequel article est choisi parmi un cuir artificiel, un cuir synthétique, une composition de revêtement, un matériau de revêtement, une fibre élastique, une composition aqueuse de revêtement en polyuréthane, un matériel médical ou un adhésif.

21. Composition de résine durcissable avec un rayonnement d'énergie actinique, qui peut être obtenue par utilisation de la composition contenant un polycarbonate diol selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5051428 A
- JP 2289616 A
- WO 2002070584 A
- JP 2000095852 A
- WO 200688152 A
- JP 60195117 A
- EP 0343572 A2
- JP 4198940 B
- JP 2009286782 A
- JP 2010199238 A


### Non-patent literature cited in the description


- **MATSLFNAGA KATSUJI.** Poriuretan No Kiso To Oyo. CMC Publishing Co., Ltd, November 2006, 96-106